# EUROPÄISCHE PATENTSCHRIFT

(11) **EP 3 559 547 B1**
(45) Veröffentlichungstag und Bekanntmachung des Hinweises auf die Patenterteilung: **24.04.2024**
(21) Anmeldenummer: 17837958.2
(22) Anmeldetag: 19.12.2017
(51) Int. Cl.: F21V 21/35, A47F 3/00

(54) **WARENPRÄSENTATIONSSYSTEM MIT BESTROMMUNGSEINRICHTUNG**
PRODUCT PRESENTATION SYSTEM WITH POWER SUPPLY
APPAREIL DE PRÉSENTATION DE PRODUIT AVEC SYSTÈME D'ALIMENTATION ÉLECTRIQUE

(30) Priorität: 20.12.2016 DE 102016124964
(43) Veröffentlichungstag der Anmeldung: 30.10.2019
(73) Patentinhaber: REHAU Industries SE & Co. KG, 95111 Rehau (DE)
(72) Erfinder: BÜHLMEYER, Christian, 1120 Wien (AT); SCHMIDT, Steven, 95182 Döhlau (DE); MICHELS, Peter, 95028 Hof (DE); PARDOS, Santiago, 95100 Selb (DE); NIEHOFF, Ansgar, 95111 Rehau (DE); EIBL, Stefan, 95028 Hof (DE); GOLDSTEIN, Jörg, 95028 Hof (DE); FRITZLAR, Holger, 50968 Köln (DE)
(86) Internationale Anmeldenummer: PCT/EP2017/083462
(87) Internationale Veröffentlichungsnummer: WO 2018/114899

(56) Entgegenhaltungen:
- WO-A1-2008/152973
- DE-U1- 20 221 024
- FR-A1- 2 671 471
- US-A1- 2010 103 672
- US-A1- 2014 055 987
- US-B1- 8 915 609

## Beschreibung

Die vorliegende Erfindung betrifft ein Warenpräsentationssystem.

Im Einzelhandel, insbesondere in Supermärkten und Drogeriemärkten, ist der Einsatz von elektronischen bzw. computerbasierten Warenerfassungssystemen gängige Praxis. Warenerfassungssysteme verarbeiten als Eingangsgröße insbesondere den bestehenden Warenbestand, welcher in der Regel - z.B. im Rahmen einer Inventur - technisch sehr aufwendig und auch meist sehr personalintensiv durch Erfassen der auf den Ablagevorrichtungen bzw. Regalböden der Warenregale angeordneten bzw. abgelegten Waren ermittelt werden muss. Ein zu unterschiedlichen Zeitpunkten ermittelter Warenbestand ist auch eine wesentliche Eingangsgröße zur Ermittlung des warenbezogenen Kaufverhaltens der potentiellen Käufer bzw. Kunden. Konkret kann so z.B. festgestellt werden, inwieweit sich die Nachfrage für eine bestimme Ware mit der Zeit ändert. Allerdings ist auch die Ermittlung des Kaufverhaltens insbesondere infolge der hierfür erforderlichen personalintensiven und technisch sehr aufwendigen Ermittlung des Warebestands sehr personalintensiv und technisch sehr aufwendig.

Aus der WO 2008/152973 A1, sowie aus der US 2010/103672 A1, ist eine Stromversorgungsschiene, ein Stromversorgungssystem und eine Regalauslage bekannt. Die US 2014/055987 A1 offenbart ein bekanntes Warenpräsentationssystem.

Der vorliegenden Erfindung liegt daher die Aufgabe zugrunde, ein Warenpräsentationssystem mit einer Einrichtung anzugeben, die dazu beitragen kann, den Aufwand zur Ermittlung eines warenbezogenen Kaufverhaltens deutlich zu reduzieren.

Diese Aufgabe wird erfindungsgemäß mit dem Warenpräsentationssystem des Anspruchs gelöst. Die Einrichtung des erfindungsgemäßen Warenpräsentationssystems umfasst einen länglichen Grundkörper aus einem Kunststoffmaterial zum Anbringen an einer Ablagevorrichtung eines Warenregals und wenigstens eine an dem Grundkörper angebrachte Signalisierungseinrichtung, die zum Signalisieren einer sich der Ablagevorrichtung nähernden Handbewegung und/oder zum Signalisieren einer sich von der Ablagevorrichtung entfernenden Handbewegung vorgesehen ist.

Bei dem länglichen Grundkörper aus einem Kunststoffmaterial zum Anbringen an einer Ablagevorrichtung (bzw. Abstellvorrichtung) eines Warenregals zum Ablegen bzw. Abstellen von Waren handelt es sich also um einen länglichen Grundkörper, der zum Anbringen an der Ablagevorrichtung vorgesehen ist bzw. welcher an der Ablagevorrichtung anbringbar bzw. mit dieser Ablagevorrichtung verbindbar ist. Die Ablagevorrichtung kann hierbei insbesondere einen Regalboden eines Warenregals umfassen bzw. in Form eines Regalbodens eines Warenregals ausgebildet sein. Zum Halten des Grundkörpers an der Ablagevorrichtung kann der Grundkörper z.B. wenigstens einen Bereich aufweisen, der in einer an der Ablagevorrichtung vorgesehenen Aufnahme aufnehmbar ist. Der wenigstens eine Bereich kann z.B. auch ein hakenförmiger Bereich sein, der in eine an der Ablagevorrichtung vorgesehene Aufnahme einhängbar ist.

Die Einrichtung sieht vor, dass sie wenigstens eine an dem Grundkörper angebrachte Signalisierungseinrichtung aufweist, die zum Signalisieren einer sich der Ablagevorrichtung nähernden Handbewegung und/oder zum Signalisieren einer sich von der Ablagevorrichtung entfernenden Handbewegung vorgesehen ist bzw. welche zum Signalisieren einer sich der Ablagevorrichtung nähernden Handbewegung und/oder zum Signalisieren einer sich von der Ablagevorrichtung entfernenden Handbewegung eingerichtet ist.

Bei der sich zu Ablagevorrichtung nähernden Handbewegung kann es sich insbesondere um eine zu wenigstens einer Ware hin gerichtete Handbewegung handeln, die auf Ablagevorrichtung angeordnet bzw. abgestellt bzw. abgelegt ist.

Es versteht sich, dass es sich bei einer der Ablagevorrichtung nähernden Handbewegung um eine Bewegung handelt, bei welcher sich der Abstand der Hand zu der Ablagevorrichtung verkleinert. Es versteht sich ferner, dass es sich bei einer von der Ablagevorrichtung entfernenden Handbewegung um eine Bewegung handelt, bei welcher sich der Abstand der Hand zu der Ablagevorrichtung vergrößert.

Mittels der wenigstens einem an dem Grundkörper angebrachten Signalisierungseinrichtung kann, wenn der Grundkörper an der Ablagevorrichtung angebracht ist, vorteilhaft also insbesondere eine sich der Ablagevorrichtung nähernde Handbewegung bzw. insbesondere eine sich wenigstens einer auf der Ablagevorrichtung angeordneten Waren näherende Handbewegung signalisiert werden. Bei der Handbewegung kann es sich z.B. um die Handbewegung eines Kunden z.B. eines Supermarkts oder z.B. eines Drogeriemarkts zum Ergreifen wenigstens einer auf der Ablagevorrichtung abgelegten bzw. abgestellten bzw. angeordneten Ware handeln.

Die Signalisierungseinrichtung ist dazu eingerichtet die jeweilige Handbewegung zu signalisieren, was in insbesondere dadurch realisiert sein kann, dass die Signalisierungseinrichtung dazu eingerichtet ist, bei Vorliegen dieser Bewegung bzw. Bewegungen ein diese Bewegung bzw. Bewegungen signalisierendes elektrisches Signal auszugeben, das z.B. in Form eines analogen Rechtecksignals ausgebildet sein kann. Selbstverständlich kann es sich hierbei auch um ein durch Analog/Digital-Wandlung erzeugtes digitales Signal handeln, welches sich vorteilhaft mittels eines Computers bzw. einer Datenverarbeitungseinrichtung eines Warenerfassungssystems z.B. des Supermarkts oder z.B. des Drogeriemarkts weiter verarbeiten lässt. Die über einen bestimmten bzw. vorgegebenen Zeitraum auftretenden bzw. erfassten Signale, die der sich der Ablagevorrichtung nähernden Handbewegung oder der sich von der Ablagevorrichtung entfernenden Handbewegung zugeordnet sind, können - ggf. nach erforderlicher Umsetzung bzw. Umwandlung in Daten bzw. digitale Daten - vorteilhaft insbesondere für eine computerbasierte Ermittlung des warenbezogenen Kaufverhaltens mittels dem Fachmann geläufiger Verfahren bzw. Methoden verwendet werden. Insbesondere kann die Ermittlung des warenbezogenen Kaufverhaltens - welche bei bekannten Lösungen insbesondere eine aufwendiges personalintensives Erfassen der Änderung des Warenbestands über einen bestimmten Zeitraum umfassen kann - durch einfach vornehmbares Anbringen des Grundkörpers an der Ablagevorrichtung und anschließende computerbasierte Auswertung der für eine vorgegebene Zeitdauer von der Signalisierungseinrichtung ausgegeben Signale erleichtert bzw. vereinfacht werden, wobei die Signale entweder der sich der Ablagevorrichtung nähernden Handbewegung oder der sich von der Ablagevorrichtung entfernenden Handbewegung zugordnet sind.

Insgesamt betrachtet kann also die Einrichtung dazu beitragen, den Aufwand zur Ermittlung eines warenbezogenen Kaufverhaltens gegenüber den bekannten Lösungen deutlich zu reduzieren, da über die Signalisierung der Handbewegungen ohne bzw. ohne großen Personalaufwand und auch ohne großen technischen Aufwand relevante Informationen für die Ermittlung des warenbezogenen Kaufverhaltens bereitgestellt werden können. Beispielsweise kann - sofern die Signalisierungseinrichtung zum Signalisieren einer sich der Ablagevorrichtung nähernden Handbewegung und zum Signalisieren einer von der Ablagevorrichtung entfernenden Handbewegung vorgesehen bzw. eingerichtet ist - bei Signalisieren einer sich der Ablagevorrichtung nähernden Handbewegung und anschließendem Signalisieren einer sich von der Ablagevorrichtung entfernenden Handbewegung mit hoher Wahrscheinlichkeit darauf geschlossen werden, dass die Ware von dem Kunden auch gekauft werden will, insbesondere wenn nach einer Wartezeit von typischerweise bis zu einer Minute keine weitere sich Ablagevorrichtung nähernde Handbewegung signalisiert wird, welche auf ein Zurückstellen der Ware durch den Kunden auf die Ablagevorrichtung zurückgeführt werden kann. Es versteht sich, dass die Signalisierungseinrichtung für eine noch aussagekräftigere Ermittlung des Kaufverhaltens besonders bevorzugt zusätzlich dazu eingerichtet sein kann, eine sich der Ablagevorrichtung nähernde Bewegung wenigstens einer Ware zu signalisieren und/oder eine sich von der Ablagevorrichtung entfernende Bewegung wenigstens einer Ware zu signalisieren. So könnte vorteilhaft bei Signalisieren einer von der Ablagevorrichtung weg gerichteten Handbewegung festgestellt werden, ob dabei von dem Kunden bzw. potentiellen Käufer auch wenigstens eine Ware von der Ablagevorrichtung entnommen wurde.

Sofern die Signalisierungseinrichtung nur bzw. ausschließlich zum Signalisieren einer sich der Ablagevorrichtung nähernden Handbewegung vorgesehen bzw. eingerichtet ist, kann aus der Signalisierung einer sich der Ablagevorrichtung nähernden Handbewegung für die Ermittlung des Kaufverhaltens darauf geschossen werden, dass zumindest eine Kaufabsicht des Kunden bzw. potentiellen Käufers vorgelegen hat.

Sofern die Signalisierungseinrichtung nur bzw. ausschließlich zum Signalisieren einer sich von der Ablagevorrichtung entfernenden Handbewegung vorgesehen bzw. eingerichtet ist, kann aus der Signalisierung einer sich von der Ablagevorrichtung entfernenden Handbewegung für die Ermittlung des Kaufverhaltens darauf geschossen werden, dass zumindest eine Kaufabsicht des Kunden bzw. potentiellen Käufers vorgelegen hat.

Es versteht sich, dass die Signalisierungseinrichtung dafür vorgesehen ist bzw. dazu eingerichtet ist, eine sich Ablagevorrichtung nähernde Handbewegung zu signalisieren und/oder eine sich von der Ablagevorrichtung entfernende Handbewegung zu signalisieren, wenn der Grundkörper aus Kunststoffmaterial zum Anbringen an der Ablagevorrichtung an dieser Ablagevorrichtung angebracht ist. Insofern betrifft die Erfindung also konkreter eine Einrichtung umfassend einen länglichen Grundkörper aus einem Kunststoffmaterial zum Anbringen an einer Ablagevorrichtung eines Warenregals und wenigstens eine an dem Grundkörper angebrachte Signalisierungseinrichtung, die zum Signalisieren einer sich der Ablagevorrichtung nähernden Handbewegung und/oder zum Signalisieren einer sich von der Ablagevorrichtung entfernenden Handbewegung vorgesehen ist bzw. eingerichtet ist, wenn der Grundkörper an der Ablagevorrichtung angebracht ist bzw. mit diesem verbunden ist.

Insofern versteht es sich auch, dass der von der Signalisierungseinrichtung erfassbare bzw. erzeugbare dreidimensionale Erfassungsbereich, in welchem die jeweilige Handbewegung stattfinden muss - damit die Signalisierungseinrichtung die jeweilige Handbewegung signalisieren kann - sich, wenn die Signalisierungseinrichtung an der Ablagevorrichtung angebracht bzw. mit dieser verbunden ist, in dem räumlichen Gebiet befindet, in welchem sich eine menschliche Hand zum Ergreifen bzw. Entnehmen einer auf der Abstellvorrichtung abgelegten Ware bewegen muss. Insofern betrifft die Erfindung also konkreter eine Einrichtung umfassend einen länglichen Grundkörper aus einem Kunststoffmaterial zum Anbringen an einer Ablagevorrichtung eines Warenregals und wenigstens eine an dem Grundkörper angebrachte Signalisierungseinrichtung die zum Signalisieren einer sich der Ablagevorrichtung nähernden Handbewegung in einem dreidimensionalen Erfassungsbereich der Signalisierungseinrichtung und/oder zum Signalisieren einer sich von der Ablagevorrichtung entfernenden Handbewegung in einem dreidimensionalen Erfassungsbereich der Signalisierungseinrichtung vorgesehen ist bzw. eingerichtet ist.

Die Signalisierungseinrichtung umfasst besonders bevorzugt einen Bewegungsmelder bzw. die Signalisierungseinrichtung ist besonders bevorzugt mit einem Bewegungsmelder identisch, wobei von dem Bewegungsmelder eine sich der Ablagevorrichtung nähernde Handbewegung in einem dreidimensionalen Erfassungsbereich des Bewegungsmelders und/oder eine sich von der Ablagevorrichtung entfernende Handbewegung in einem dreidimensionalen Erfassungsbereich des Bewegungsmelders durch Ausgabe eines Signals erfolgt, das der von der Ablagevorrichtung sich entfernenden Handbewegung bzw. der sich der Ablagevorrichtung nähernden Handbewegung zugeordnet ist. Bei dem Bewegungsmelder kann es sich um einen Bewegungsmelder handeln, bei dem - je nach Ausführung - in dem dreidimensionalen Erfassungsbereich elektromagnetische Wellen (HF oder Doppelradar) oder Ultraschallwellen vorhanden sind. Insbesondere kann es sich um einen Bewegungsmelder mit einem PIR-Sensor bzw. in Form eines PIR-Sensor (von "passive infrared") handeln. Dieser reagiert unter Ausnutzung der Pyroelektrizität seiner Empfängerfläche auf eine Temperaturänderung, also hier insbesondere hervorgerufen durch die sich bewegende menschliche Hand.

Die Signalisierungseinrichtung kann bei einer bevorzugten Ausführungsform auch eine Kamera bzw. eine digitale Kamera und eine Bildverarbeitungseinrichtung mit einer Mustererkennung umfassen, wobei die Mustererkennung eingerichtet ist, eine von der Kamera bzw. digitalen Kamera erfasste und sich der Ablagevorrichtung nähernde Handbewegung und/oder eine von der Kamera bzw. digitalen Kamera erfasste und sich von der Ablagevorrichtung entfernende Handbewegung zu erkennen, und wobei die Signalisierungseinrichtung eingerichtet ist, bei Erkennung der sich der Ablagevorrichtung nähernden Handbewegung und/oder der sich von der Ablagevorrichtung entfernenden Handbewegung ein analoges bzw. digitales Signal zum Signalisieren der Handbewegung auszugeben.

Sofern die Signalisierungseinrichtung bzw. die jeweilige Signalisierungseinrichtung mit einem Bewegungsmelder identisch ist, kann die erfindungsgemäße Einrichtung einen länglichen Grundkörper aus einem Kunststoffmaterial zum Anbringen an einer Ablagevorrichtung eines Warenregals und wenigstens einen an dem Grundkörper angebrachte Bewegungsmelder umfassen, der zum Signalisieren einer sich der Ablagevorrichtung nähernden Handbewegung und/oder zum Signalisieren einer sich von der Ablagevorrichtung entfernenden Handbewegung vorgesehen ist bzw. eingerichtet ist.

Bei dem länglichen Grundkörper aus einem Kunststoffmaterial handelt es sich besonders bevorzugt um einen extrudierten Grundköper bzw. einem im Wege der Extrusion hergestellten Grundkörper. Derartige Grundkörper sind kostengünstig in großer Vielzahl und hoher gleichbleibender Qualität herstellbar.

Erfindungsgemäß weist der Grundkörper einen sich über die gesamte Länge des Grundkörpers erstreckenden Kanal auf, wobei die Signalisierungseinrichtung in dem Kanal angeordnet ist bzw. in dem Kanal angeordnet und in dem Kanal an dem Grundkörper angebracht ist. In einem Kanal des Grundkörpers kann die Signalisierungseinrichtung wirksam vor äußeren Einflüssen, insbesondere mechanischen Erschütterungen geschützt werden.

Der Kanal ist besonders bevorzugt ein zu einer Längsseite des Grundkörpers hin offener Kanal, so dass sich der Erfassungsbereich der Signalisierungseinrichtung vorteilhaft ohne ggf. störende Bereiche des Grundkörpers entlang der gesamten Länge des Grundkörpers von der Signalisierungseinrichtung in die Umgebung der Signalisierungseinrichtung erstrecken kann.

Insbesondere kann eine Mehrzahl von Signalisierungseinrichtungen in dem Kanal angeordnet sein.

Insbesondere kann eine Mehrzahl von zwei bis wenigstens fünf oder eine Mehrzahl von zwei bis wenigstens zehn oder eine Mehrzahl von zwei bis wenigstens fünfzehn oder eine Mehrzahl von zwei bis wenigstens zwanzig Signalisierungseinrichtungen in dem Kanal angeordnet sein.

Besonders bevorzugt sind die Signalisierungseinrichtungen in dem Kanal unter Ausbildung einer sich entlang der Längsachse des Grundkörpers erstreckenden Reihe in dem Kanal angeordnet bzw. aufeinanderfolgend angeordnet. Diese reihenförmige Anordnung ermöglicht vorteilhaft eine Anordnung bzw. Anbringung der Einrichtung an der Ablagevorrichtung des Warenregals, bei welcher jeweils eine Signalisierungseinrichtung jeweils einem Abschnitt der Ablagevorrichtung zugeordnet sein kann bzw. für diesen Abschnitt zuständig sein kann. So kann vorteilhaft für eine Vielzahl von auf der Ablagevorrichtung angeordneten bzw. abgelegten Waren jeweils eine warenspezifische bzw. warentypspezifische Ermittlung unter Verwendung der jeweiligen Signalisierungseinrichtung realisiert werden. Zur Realisierung dieser vorteilhaften Anordnung bzw. Anbringung der Einrichtung an der Ablagevorrichtung des Warenregals kann, sofern die Ablagevorrichtung länglich ausgebildet ist, der längliche Grundkörper vorzugsweise an der Ablagevorrichtung in einer Anordnung anbringbar sein, bei welcher eine sich entlang der Längsachse des Grundkörpers erstreckende Fläche des Grundkörpers einer sich entlang der Längsachse des Ablageelements erstreckenden Fläche der Ablagevorrichtung zugewandt ist. Oder in anderen Worten: Der längliche Grundkörper kann, sofern die Ablagevorrichtung länglich ausgebildet ist, vorzugsweise derart an der Ablagevorrichtung anbringbar bzw. haltbar sein bzw. derart mit der Ablagevorrichtung verbindbar sein, dass eine sich entlang der Längsachse des Grundkörpers erstreckende Fläche des Grundkörpers einer sich entlang der Längsachse des Ablageelements erstreckenden Fläche der Ablagevorrichtung zugewandt ist.

Die Erfindung betrifft ein Warenpräsentationssystem mit einem System Einrichtung und wenigstens einer Abschlusseinrichtung, wobei der Grundkörper der Einrichtung zwei entgegengesetzte Endabschnitte aufweist, wobei jeder der Endabschnitte einen von zwei entgegengesetzten Kanal-Endabschnitten des Kanals aufweist, wobei das System wenigstens zwei Stromleiter zur Stromversorgung der Signalisierungseinrichtung bzw. der wenigstens einen Signalisierungseinrichtung aufweist, wobei jeder der Stromleiter zwei Stromleiter-Endabschnitte und einen Zwischenabschnitt aufweist, wobei der Zwischenabschnitt jedes Stromleiters in dem Kanal angeordnet ist und von jedem Stromleiter jeweils einer der Stromleiter-Endabschnitte in jeweils einem der beiden entgegengesetzten Kanal-Endabschnitte mit wenigstens einem Teilabschnitt angeordnet ist, wobei die Abschlusseinrichtung wenigstens zwei elektrische Versorgungsleitungen aufweist, die zum Herstellen einer Verbindung bzw. einer elektrisch leitenden Verbindung mit einer Stromquelle vorgesehen sind, wobei die Abschlusseinrichtung mit wenigstens einem der beiden entgegengesetzten Endabschnitte des Grundkörpers verbindbar ist, wobei durch Verbinden der Abschlusseinrichtung mit dem Endabschnitt des Grundkörpers jeweils ein Versorgungsleitungs-Endabschnitt jeder der Versorgungsleitungen mit jeweils einem Stromleiter-Endabschnitt der Stromleiter-Endabschnitte elektrisch leitend kontaktierbar ist, die in dem Kanal-Endabschnitt des Endabschnitts des Grundkörpers mit wenigstens einem Teilabschnitt angeordnet sind bzw. die in dem Kanal-Endabschnitt des Endabschnitts des Grundkörpers mit wenigstens einem Teilabschnitt angeordnet sind, mit welchem die Abschlusseinrichtung verbunden werden soll bzw. verbunden wird.

Der Kanal bzw. die Aufnahme erstreckt sich über die gesamte Länge des Grundkörpers bzw. der Kanal oder die Aufnahme erstreckt sich von einem von zwei entgegengesetzten Enden des Grundkörpers bis zu dem anderen der beiden entgegengesetzten Enden des Grundkörpers.

Der Grundkörper weist zwei entgegengesetzte Endabschnitte auf bzw. der Grundkörper weist zwei längsläufig zueinander entgegengesetzte Endabschnitte auf, wobei jeder der Endabschnitte des Grundkörpers einen bzw. jeweils einen von zwei entgegengesetzten Kanal-Endabschnitten des Kanals aufweist bzw. einen bzw. jeweils einen von zwei längsläufig zueinander entgegengesetzten Kanal-Endabschnitten des Kanals aufweist (bzw. einen von zwei entgegengesetzten Aufnahme-Endabschnitten der Aufnahme aufweist bzw. einen von zwei längsläufig zueinander entgegengesetzten Aufnahme-Endabschnitten der Aufnahme aufweist) bzw. wobei sich an jeweils einem von zwei entgegengesetzten - bzw. längsläufig zueinander entgegengesetzten - Endabschnitten des Grundkörpers jeweils ein Kanal-Endabschnitt bzw. ein Aufnahme-Endabschnitt befindet.

Der Kanal des Grundkörpers erstreckt sich über die gesamte Länge des Grundkörpers. Der Kanal ist besonders bevorzugt ein zur Längsachse des Grundkörpers parallel ausgerichteter Kanal bzw. der Kanal ist besonders bevorzugt ein zur Längsachse des Grundkörpers parallel ausgerichteter länglicher Kanal. Sofern es sich vorzugsweise um einen extrudierten Grundkörper handelt, ist der Kanal ein beim Extrudieren des Grundkörpers gebildeter Kanal. Infolge der Erstreckung über die gesamte Länge des Grundkörpers ist der Kanal bzw. die Aufnahme zu beiden Stirnseiten des Grundkörpers hin offen bzw. zugänglich.

Das System weist wenigstens zwei Stromleiter zur Stromversorgung der Signalisierungseinrichtung bzw. Signalisierungseinrichtungen auf, wobei jeder der Stromleiter zwei Stromleiter-Endabschnitte und einen Zwischenabschnitt aufweist, wobei der Zwischenabschnitt jedes Stromleiters in dem Kanal angeordnet ist und von jedem Stromleiter jeweils einer der Stromleiter-Endabschnitte in jeweils einem der beiden entgegengesetzten Kanal-Endabschnitte mit wenigstens einem Teilabschnitt angeordnet ist. Zur Realisierung der Stromversorgung kann jeder der Stromleiter mit jeweils einem Stromversorgungskontakt der Signalisierungseinrichtung elektrisch leitend verbunden sein.

Bei den voneinander beabstandeten Stromleitern kann es sich um Stromleiter mit einer dem Fachmann geläufigen Ausbildung aufweisen. So können die Stromleiter z.B. insbesondere in Form von Leiterbahnen ausgebildet sein, wobei die Leiterbahnen z.B. Leiterbahnen aus Kupfer, aus verzinntem Kupfer, aus verkupfertem Aluminium oder aus verzinktem Aluminium oder aus verkupfertem Gold oder aus Silber oder aus Graphit oder aus leitfähigen Polymeren (wie z.B. PEDOT-PSS, PANI, etc.) oder aus verschiedenen Kohlenstoffmodifikationen (wie z.B. CNTs, Fullerene etc.) sein können. Die Leiterbahn können zum Halten derselben in dem Kanal z.B. auf das Kunststoffmaterial des Grundkörpers aufextrudiert oder aufkaschiert oder aufgedruckt sein oder jede der Leiterbahnen kann zum Halten derselben in dem Kanal in Form eines länglichen Teilstücks eines länglichen leitenden Körpers ausgebildet sein, wobei ein weiteres Teilstück des länglichen leitenden Körpers in das Kunststoffmaterial des extrudierten Grundkörpers z.B. einextrudiert, eingedrückt, eingeklebt oder eingeclipst sein kann.

Das System sieht vor, dass die Abschlusseinrichtung (bzw. die wenigstens eine Abschlusseinrichtung) wenigstens zwei elektrische Versorgungsleitungen aufweist, die zum Herstellen einer Verbindung mit einer Stromquelle vorgesehen sind bzw. die zum Anschließen an eine Stromquelle vorgesehen sind, wobei die Abschlusseinrichtung mit wenigstens einem der beiden entgegengesetzten Endabschnitte des Grundkörpers verbindbar ist, und wobei durch Verbinden der Abschlusseinrichtung mit dem Endabschnitt des Grundkörper jeweils ein Versorgungsleitungs-Endabschnitt jeder der Versorgungsleitungen mit jeweils einem Stromleiter-Endabschnitt der Stromleiter-Endabschnitte elektrisch leitend kontaktierbar ist, die in dem Kanal-Endabschnitt des Endabschnitts mit wenigstens einem Teilabschnitt angeordnet sind.

Die erfindungsgemäß vorgesehene elektrische Kontaktierung der Versorgungsleitungs-Endabschnitte der Abschlusseinrichtung mit den Stromleiter-Endabschnitten der Stromleiter zur Stromversorgung der Signalisierungseinrichtungen ermöglicht vorteilhaft eine auf sehr einfache und praktische Weise realisierbare Bereitstellung der Stromversorgung bzw. Spannungsversorgung der Signalisierungseinrichtungen über die elektrischen Versorgungsleitungen der Abschlusseinrichtung, die zum Herstellen einer Verbindung mit einer Stromquelle bzw. einer externen Stromquelle vorgesehen sind bzw. die zum Herstellen einer elektrisch leitenden Verbindung mit einer Stromquelle bzw. einer externe Stromquelle bzw. einer Spannungsquelle bzw. einer externen Spannungsquelle vorgesehen sind.

Insbesondere wenn eine Mehrzahl von Signalisierungseinrichtungen in dem Kanal angeordnet sind, die alle über wenigstens zwei der Stromleiter mit Strom bzw. Spannung versorgbar sind (also insbesondere bei einer Parallelschaltung) kann die Stromversorgung aller Signalisierungseinrichtungen also einfach dadurch realisiert werden, dass die Abschlusseinrichtung mit dem jeweiligen Endabschnitt des Grundkörpers verbunden wird, hiernach die Versorgungsleitungen der Abschlusseinrichtung an eine Stromquelle angeschlossen werden bzw. elektrische leitende Verbindungen der Versorgungsleitungen zu einer Stromquelle hergestellt werden und die Signalisierungseinrichtungen von der Stromquelle über die Versorgungsleitungen bestromt werden bzw. mit einer Versorgungsspannung versorgt werden, wobei dies z.B. bei einer Gleichstromquelle dadurch erfolgen kann, dass eine der Versorgungsleitungen an den Pluspol der Stromquelle angeschlossen wird und die andere der beiden Versorgungsleitungen an den Minuspol der Stromquelle angeschlossen wird. Insgesamt betrachtet kann infolge der mittels des erfindungsgemäßen Systems sehr einfach realisierbaren Stromversorgung der Signalisierungseinrichtungen der Verkabelungsaufwand für die Bereitstellung der Stromversorgung reduziert bzw. deutlich reduziert werden. Es sind lediglich die Versorgungsleitungen an die jeweilige Stromquelle bzw. Spannungsquelle anzuschließen. Ein aufwendiges Verkabeln jeder einzelnen Signalisierungseinrichtung kann vorteilhaft entfallen. So können der Installationsaufwand und mithin insbesondere auch Installationskosten deutlich reduziert werden.

Bei dem System weist jeder der Stromleiter zwei Stromleiter-Endabschnitte auf, von denen jeweils einer in jeweils einem der beiden entgegengesetzten Kanal-Endabschnitte mit wenigstens einem Teilabschnitt angeordnet ist. Das heißt also, dass bei einem der Stromleiter ein erster der beiden Stromleiter-Endabschnitte in einem ersten der beiden entgegengesetzten Kanal-Endabschnitte mit wenigstens einem Teilabschnitt angeordnet ist und der zweite Stromleiter-Endabschnitt dieses Stromleiters in dem zweiten der beiden entgegengesetzten Kanal-Endabschnitte mit wenigstens einem Teilabschnitt angeordnet ist. Ein Zwischenabschnitt des jeweiligen Stromleiters - der sich von dem ersten Stromleiter-Endabschnitt bis zu dem zweiten Stromleiter-Endabschnitt erstreckt bzw. welcher die Stromleiter-Endabschnitte verbindet, ist dann in einem mittleren Bereich des Kanals angeordnet, der von dem ersten Kanal-Endabschnitt bis zu dem zweiten Kanal-Endabschnitt reicht. Es versteht sich, dass jeder der Stromleiter besonders bevorzugt geradlinig ausgebildet ist und sich besondere bevorzugt parallel bzw. im Wesentlichen parallel zur Längsachse des extrudierten Grundkörpers erstreckt. Insbesondere kann sich jeder der Stromleiter vorzugsweise über die gesamte Länge des Grundkörpers bzw. Kanals erstrecken. Allerdings ist dies nicht zwingend.

Die Abschlusseinrichtung weist wenigstens zwei elektrische Versorgungsleitungen auf, die zum Herstellen einer Verbindung mit einer Stromquelle bzw. zum Anschließen an eine Stromquelle vorgesehen sind. Es versteht sich, dass es sich bei den Versorgungsleitungen wenigstens abschnittsweise insbesondere um stromführende Leiter bzw. Innenleiter bzw. Seelen eines Versorgungskabels handeln kann, die besonders bevorzugt stromführende Leiter bzw. Innenleiter eines einzigen Versorgungskabels sind.

Es versteht sich, dass jeder der Stromleiter-Endabschnitte z.B. auch in Form eines stromleitenden Kontakts eines Steckers oder Gegensteckers ausgebildet sein kann. Es versteht sich auch, dass jeder der Versorgungsleitungs-Endabschnitte auch in Form eines stromleitenden Kontakts eines entsprechenden Gegensteckers bzw. Steckers ausgebildet sein kann, so dass durch Verbinden der Abschlusseinrichtung mit dem Endabschnitt des Grundkörpers auch Steckerverbindungen ausbildbar sein können, um die elektrisch leitende Kontaktierung bzw. die elektrische leitende Verbindung zwischen den Versorgungsleitungs-Endabschnitten und den Stromleiter-Endabschnitten zu realisieren.

Die Abschlusseinrichtung ist mit wenigstens einem der beiden entgegengesetzten Endabschnitte des Grundkörpers verbindbar, wobei die Abschlusseinrichtung mit dem Endabschnitt des Grundkörpers besonders bevorzugt kraftschlüssig verbindbar ist. Insbesondere kann die Abschlusseinrichtung vorzugsweise einen Einsteckkörper aufweisen, der zum Ausbilden einer kraftschlüssigen Verbindung mit dem extrudierten Grundkörper stirnseitig in den Kanal des extrudierten Grundkörpers einsteckbar ist.

Besonders bevorzugt ist die Abschlusseinrichtung mit wenigstens einem der beiden entgegengesetzten Endabschnitte des Grundkörpers lösbar verbindbar bzw. manuell lösbar verbindbar, so dass die Abschlusseinrichtung insbesondere für Wartungszwecke oder Reparaturzwecke von dem extrudierten Grundkörper vorteilhaft gelöst und auch ggf. mit diesem wieder verbunden werden kann.

Durch Verbinden der Abschlusseinrichtung mit dem Endabschnitt des Grundkörpers ist jeweils ein Versorgungsleitungs-Endabschnitt jeder der Versorgungsleitungen mit jeweils einem Stromleiter-Endabschnitt der Stromleiter-Endabschnitte elektrisch leitend kontaktierbar, die in dem Kanal-Endabschnitt des Endabschnitts mit wenigstens einem Teilabschnitt angeordnet sind. Diese Kontaktierbarkeit kann in einer dem Fachmann geläufigen Weise insbesondere durch geeignete Anordnung der Versorgungsleitungs-Endabschnitte erfolgen. So kann z.B. jeder der Versorgungsleitungs-Endabschnitte bei bestehender Verbindung zwischen Grundkörper und Abschlusseinrichtung insbesondere in den Kanal des Grundkörpers hineinragen, um die Kontaktierung zu den Stromleiter-Endabschnitten, die jeweils mit wenigstens einem Teilabschnitt in dem Kanal angeordnet sind, zu realisieren.

Jeder Stromleiter weist zwei Stromleiter-Endabschnitte auf, von denen jeweils einer in einem der beiden entgegengesetzten Kanal-Endabschnitte mit wenigstens einem Teilabschnitt angeordnet ist. Der jeweilige Stromleiter-Endabschnitt ist also mit wenigstens einem Teilabschnitt in einem der beiden entgegengesetzten Kanal-Endabschnitte angeordnet, so dass also der jeweilige Stromleiter-Endabschnitt insbesondere auch vollständig bzw. zur Gänze in dem jeweiligen Kanal-Endabschnitt angeordnet sein kann bzw. in dem Kanal angeordnet sein kann, und zwar ohne aus dem Kanal-Endabschnitt herauszuragen. Erfindungsgemäß kann jedoch auch vorgesehen sein, dass nur ein Teilabschnitt des jeweiligen Stromleiter-Endabschnitt in dem Kanal-Endabschnitt angeordnet ist, so dass ein weiterer Teilabschnitt des jeweiligen Stromleiter-Endabschnitts also insbesondere auch außerhalb des jeweiligen Kanal-Endabschnitts angeordnet sein kann bzw. aus dem jeweiligen Kanal-Endabschnitt herausragen kann.

Bei dem erfindungsgemäßen Warenpräsentationssystem weist der Grundkörper einen weiteren Kanal auf, wobei in dem weiteren Kanal mehrere elektronische Anzeigeeinrichtungen zur Anzeige von warenbezogenen Informationen aufgenommen sind, wobei der weitere Kanal sich über die gesamte Länge des Grundkörpers erstreckt, wobei jeder der Endabschnitte des Grundkörpers einen von zwei entgegengesetzten Kanal-Endabschnitten des weiteren Kanals aufweist, wobei die Anzeigeeinrichtungen in dem weiteren Kanal aufgenommen sind, wobei das System wenigstens zwei Stromleiter zur Stromversorgung der Anzeigeeinrichtungen aufweist, wobei jeder der Stromleiter zwei Stromleiter-Endabschnitte und einen Zwischenabschnitt aufweist, wobei der Zwischenabschnitt jedes Stromleiters in dem weiteren Kanal angeordnet ist und von jedem Stromleiter jeweils einer der Stromleiter-Endabschnitte in jeweils einem der beiden entgegengesetzten Kanal-Endabschnitte des weiteren Kanals mit wenigstens einem Teilabschnitt angeordnet ist, wobei durch Aufnehmen der Anzeigeeinrichtungen in dem weiteren Kanal jeweils ein Stromversorgungskontakt jeder Anzeigeeinrichtung mit jeweils einem der Stromleiter elektrisch leitend kontaktierbar ist, wobei die Abschlusseinrichtung wenigstens zwei weitere elektrische Versorgungsleitungen aufweist, die zum Herstellen einer Verbindung mit einer Stromquelle vorgesehen sind, wobei durch Verbinden der Abschlusseinrichtung mit dem Endabschnitt des Grundkörpers jeweils ein Versorgungsleitungs-Endabschnitt jeder der weiteren Versorgungsleitungen mit jeweils einem Stromleiter-Endabschnitt der Stromleiter-Endabschnitte elektrisch leitend kontaktierbar ist, die in dem Kanal-Endabschnitt des Endabschnitts des Grundkörpers mit wenigstens einem Teilabschnitt angeordnet sind, also dem Endabschnitt des Grundkörpers mit welchem die Abschlusseinrichtung verbunden wird bzw. verbunden werden soll, wobei der bzw. dieser Kanal-Endabschnitt ein Kanal-Endabschnitt des weiteren Kanals ist.

Die Anzeigeeinrichtungen sind in dem weiteren Kanal aufgenommen, wobei die Anzeigeeinrichtungen in dem weiteren Kanal zur Realisierung einer Reihe von aufeinanderfolgend angeordneten Anzeigeeinrichtungen vorzugsweise entlang der Längsachse des Grundkörpers aufeinanderfolgend in dem weiteren Kanal aufnehmbar sind bzw. unter Ausbildung einer sich entlang der Längsachse des Grundkörpers erstreckenden Reihe in dem weiteren Kanal aufnehmbar bzw. aufeinanderfolgend aufnehmbar sind. Diese reihenförmige Anordnung ermöglicht vorteilhaft eine Anordnung des Systems in Umgebung eines Warenregals, bei welcher jeweils eine Anzeigeeinrichtung vom potentiellen Käufer oder Kaufinteressenten unmittelbar der zugehörigen Ware zugeordnet werden kann, und zwar der Waren von mehreren Waren, die ebenfalls reihenförmig aufeinanderfolgend auf einer Ablagevorrichtung bzw. einem Regalbodens eines Warenregals abgestellt bzw. angeordnet sind.

Der weitere bzw. zweite Kanal des Grundkörpers, der zur Aufnahme der Anzeigeeinrichtungen vorgesehen bzw. eingerichtet ist, erstreckt sich über die gesamte Länge des Grundkörpers. Der weitere Kanal ist besonders bevorzugt ein zur Längsachse des Grundkörpers parallel ausgerichteter Kanal bzw. der weitere Kanal ist besonders bevorzugt ein zur Längsachse des Grundkörpers parallel ausgerichteter länglicher Kanal. Sofern es sich vorzugsweise um einen extrudierten Grundkörper handelt, ist der weitere Kanal ein beim Extrudieren des Grundkörpers gebildeter weiterer Kanal. Infolge der Erstreckung über die gesamte Länge des Grundkörpers ist der weitere Kanal bzw. die weitere Aufnahme zu beiden Stirnseiten des Grundkörpers hin offen bzw. zugänglich. Besonders bevorzugt ist der weitere Kanal auch zu einer Längsseite des Grundkörpers offen bzw. zugänglich, so dass die Anzeigeeinrichtungen von der Längsseite her in dem weiteren Kanal aufgenommen werden können. Dies hat den Vorteil, dass die Anzeigeeinrichtungen zur Realisierung einer Reihe von aufeinanderfolgend an dem Grundkörper angeordneten Anzeigeeinrichtungen nicht stirnseitig nacheinander in den weiteren Kanal eingeschoben werden müssen, was sich je nach Ausführung des weiteren Kanals infolge von Verkantungen schwierig gestalten kann.

Die Anzeigeeinrichtungen sind in dem Kanal aufgenommen bzw. jede der Anzeigeeinrichtungen ist in dem weiteren Kanal aufgenommen, wobei die Anzeigeeinrichtungen/jede Anzeigeeinrichtung in dem weiteren Kanal insbesondere kraftschlüssig aufnehmbar sein können/kann. Besonders praktisch können/kann die Anzeigeeinrichtungen bzw. jede Anzeigeeinrichtung durch Aufnehmen in dem weiteren Kanal mit dem extrudierten Grundkörper eine lösbare Schnappverbindung ausbilden.

Die obige praktische Ausführungsform des erfindungsgemäßen Systems weist wenigstens zwei Stromleiter zur Stromversorgung der Anzeigeeinrichtungen auf, wobei jeder Stromleiter zwei Stromleiter-Endabschnitte und einen Zwischenabschnitt aufweist.

Der Zwischenabschnitt jedes Stromleiters zur Stromversorgung der Anzeigeeinrichtungen ist in dem weiteren Kanal angeordnet und von jedem Stromleiter ist jeweils einer der Stromleiter-Endabschnitte in jeweils einem der beiden entgegengesetzten Kanal-Endabschnitte des weiteren Kanals mit wenigstens einem Teilabschnitt angeordnet.

Bei den voneinander beabstandeten Stromleitern zur Stromversorgung der Anzeigeeinrichtungen kann es sich um Stromleiter mit einer dem Fachmann geläufigen Ausbildung aufweisen. So können die Stromleiter z.B. insbesondere in Form von Leiterbahnen ausgebildet sein, wobei die Leiterbahnen z.B. Leiterbahnen aus Kupfer, aus verzinntem Kupfer, aus verkupfertem Aluminium oder aus verzinktem Aluminium oder aus verkupfertem Gold oder aus Silber oder aus Graphit oder aus leitfähigen Polymeren (wie z.B. PEDOT-PSS, PANI, etc.) oder aus verschiedenen Kohlenstoffmodifikationen (wie z.B. CNTs, Fullerene etc.) sein können. Die Leiterbahn können zum Halten derselben in dem Kanal z.B. auf das Kunststoffmaterial des Grundkörpers aufextrudiert oder aufkaschiert oder aufgedruckt sein oder jede der Leiterbahnen kann zum Halten derselben in dem Kanal in Form eines länglichen Teilstücks eines länglichen leitenden Körpers ausgebildet sein, wobei ein weiteres Teilstück des länglichen leitenden Körpers in das Kunststoffmaterial des extrudierten Grundkörpers z.B. einextrudiert, eingedrückt, eingeklebt oder eingeclipst sein kann.

Die obige praktische Ausführungsform des Systems des erfindungemäßen Warenpräsentationssystems sieht vor, dass sie eine über die Signalisierungseinrichtung bzw. Signalisierungseinrichtungen mögliche Ermittlung eines warenbezogenen Kaufverhaltens mit einem weiteren Kanal zur Aufnahme der elektronischen Anzeigeeinrichtungen kombiniert, wobei vorteilhaft durch Aufnehmen der Anzeigeeinrichtungen in dem weiteren Kanal jeweils ein Stromversorgungskontakt jeder Anzeigeeinrichtung bzw. jeweils ein Stromversorgungsanschluss jeder Anzeigeeinrichtung mit jeweils einem der Stromleiter elektrisch leitend kontaktierbar ist. So kann vorteilhaft auf einfache und praktische Weise für jede in dem Kanal aufzunehmende Anzeigeeinrichtung zur Anzeige von warenbezogenen Informationen eine für die Stromversorgung der Anzeigeeinrichtungen erforderliche Kontaktierung der in dem Kanal angeordneten Stromleiter mit den Stromversorgungskontakten bzw. Spannungsversorgungskontakten der Anzeigeeinrichtungen bzw. den Stromversorgungsanschlüssen bzw. den Spannungsversorgungsanschlüssen der Anzeigeeinrichtungen realisiert werden.

Ferner sieht das System vor, dass die Abschlusseinrichtung (bzw. die wenigstens eine Abschlusseinrichtung) zusätzlich bzw. ferner wenigstens zwei weitere elektrische Versorgungsleitungen aufweist, die zum Herstellen einer Verbindung mit einer Stromquelle vorgesehen sind bzw. die zum Anschließen an eine Stromquelle vorgesehen sind, wobei die Abschlusseinrichtung mit wenigstens einem der beiden entgegengesetzten Endabschnitte des Grundkörpers verbindbar ist, wobei durch Verbinden der Abschlusseinrichtung mit dem Endabschnitt des Grundkörpers jeweils ein Versorgungsleitungs-Endabschnitt jeder der weiteren Versorgungsleitungen mit jeweils einem Stromleiter-Endabschnitt der Stromleiter-Endabschnitte elektrisch leitend kontaktierbar ist, die in dem Kanal-Endabschnitt des Endabschnitts des Grundkörpers mit wenigstens einem Teilabschnitt angeordnet sind.

Die erfindungsgemäß vorgesehene Kontaktierbarkeit der Stromversorgungskontakte jeder der Anzeigeeinrichtungen mit den in dem Kanal angeordneten Stromleitern durch Aufnehmen der Anzeigeeinrichtungen in dem Kanal zusammen mit der durch einfaches Verbinden der Abschlusseinrichtung mit dem Endabschnitt realisierbaren elektrischen Kontaktierung der Versorgungsleitungs-Endabschnitte der Abschlusseinrichtung mit den Stromleiter-Endabschnitten der Stromleiter ermöglicht vorteilhaft eine auf sehr einfache und praktische Weise realisierbare Bereitstellung der Stromversorgung bzw. Spannungsversorgung der Anzeigeeinrichtungen über die elektrischen Versorgungsleitungen der Abschlusseinrichtung, die zum Herstellen einer Verbindung mit einer Stromquelle bzw. einer externen Stromquelle vorgesehen sind bzw. die zum Herstellen einer elektrisch leitenden Verbindung mit einer Stromquelle bzw. einer externen Stromquelle bzw. einer Spannungsquelle bzw. einer externen Spannungsquelle vorgesehen sind. Insgesamt betrachtet kann also die Stromversorgung aller Anzeigeeinrichtungen und der Signalisierungseinrichtung bzw. Signalisierungseinrichtungen also einfach dadurch realisiert werden, dass die Anzeigeeinrichtungen in dem Kanal aufgenommen werden, die Abschlusseinrichtung mit dem Endabschnitt des Grundkörpers verbunden wird, hiernach alle Versorgungsleitungen der Abschlusseinrichtung an eine Stromquelle oder mehrere Stromquellen angeschlossen werden bzw. elektrische leitende Verbindungen der Versorgungsleitungen zu einer oder mehrerer Stromquellen hergestellt werden und die Anzeigeeinrichtungen und die Signalisierungseinrichtung bzw. Signalisierungseinrichtungen von der Stromquelle über die Versorgungsleitungen bestromt werden bzw. mit einer Versorgungsspannung versorgt werden, wobei dies z.B. bei einer Gleichstromquelle dadurch erfolgen kann, dass eine der Versorgungsleitungen an den Pluspol der Stromquelle angeschlossen wird und der andere der beiden Versorgungsleitungen an den Minuspol der Stromquelle angeschlossen wird. Insgesamt betrachtet kann infolge der mittels der obigen praktischen Ausführungsform des erfindungsgemäßen Systems sehr einfach realisierbaren Stromversorgung der Anzeigeeinrichtungen und der Signalisierungseinrichtung bzw. Signalisierungseinrichtungen der Verkabelungsaufwand für die Bereitstellung der Stromversorgung reduziert bzw. deutlich reduziert werden. Nach der Aufnahme der Anzeigeeinrichtungen in dem Kanal und dem Verbinden der Abschlusseinrichtung mit dem jeweiligen Grundkörper-Endabschnitt sind lediglich die Versorgungsleiter an die jeweilige Stromquelle bzw. Spannungsquelle anzuschließen. Ein aufwendiges Verkabeln jeder einzelnen Anzeigeeinrichtung, wie es bei bekannten Lösungen der Fall ist, kann vorteilhaft entfallen. So können der Installationsaufwand und mithin insbesondere auch Installationskosten deutlich reduziert werden.

Bei den Anzeigeneinrichtungen zur Anzeige von warenbezogenen Informationen bzw. produktbezogenen Informationen kann es sich um geläufige bzw. bekannte Anzeigeeinrichtungen mit einem elektronischen Display handeln, die für Anzeige von warenbezogenen Informationen bzw. produktbezogenen Informationen vorgesehen sind bzw. eingerichtet sind. Insbesondere kann es um Anzeigeeinrichtungen handeln, die in Form sogenannter ESLs (Electronic Shelf Labels) ausgebildet sind, die die auch als elektronisches Preisschild bezeichnet werden. Größenordnungsmäßig können diese Anzeigeeinrichtungen eine Länge innerhalb eines Bereichs von 2 bis 125 cm, eine Höhe innerhalb eines Bereichs von 2 bis 50 cm und eine Dicke innerhalb eines Bereichs von 0,2 bis 2 cm aufweisen.

Bei den warenbezogenen Informationen kann es sich um beliebige Informationen über die jeweilige Ware handeln, also z.B. um den Preis der Ware, die Bezeichnung der Ware, das Haltbarkeitsdatum, das Gewicht usw.

Bei der obigen praktischen Ausführungsform des Systems des erfindungsgemäßen Warenpräsentationssystems weist jeder der Stromleiter zwei Stromleiter-Endabschnitte auf, von denen jeweils einer in einem der beiden entgegengesetzten Kanal-Endabschnitte mit wenigstens einem Teilabschnitt angeordnet ist. Das heißt also, dass bei einem der Stromleiter ein erster der beiden Stromleiter-Endabschnitte in einem ersten der beiden entgegengesetzten Kanal- Endabschnitte mit wenigstens einem Teilabschnitt angeordnet ist und der zweite Stromleiter-Endabschnitt dieses Stromleiters in dem zweiten der beiden entgegengesetzten Kanal-Endabschnitte mit wenigstens einem Teilabschnitt angeordnet ist. Ein Zwischenabschnitt des jeweiligen Stromleiters, der sich von dem ersten Stromleiter-Endabschnitt bis zu dem zweiten Stromleiter-Endabschnitt erstreckt bzw. der die Stromleiter-Endabschnitte verbindet, ist dann in einem mittleren Bereich des Kanals angeordnet, der von dem ersten Kanal-Endabschnitt bis zu dem zweiten Kanal-Endabschnitt reicht. Es versteht sich, dass jeder der Stromleiter besonders bevorzugt geradlinig ausgebildet ist und sich besondere bevorzugt parallel bzw. im Wesentlichen parallel zur Längsachse des extrudierten Grundkörpers erstreckt. Insbesondere kann sich jeder der Stromleiter bevorzugt auch über die gesamte Länge des Grundkörpers bzw. weiteren Kanals erstrecken, Allerdings ist dies nicht zwingend. Erfindungsgemäß ist lediglich zu bewerkstelligen, dass durch Aufnehmen einer Anzeigeeinrichtung in dem weiteren Kanal jeweils einer der Stromversorgungskontakte der Anzeigeeinrichtung mit jeweils einem der Stromleiter elektrisch leitend kontaktierbar ist. Diese Kontaktierbarkeit kann in einer dem Fachmann geläufigen Weise insbesondere durch geeignete Anpassung der Abmessungen des Kanals an die relevanten Abmessungen des bzw. der Anzeigeeinrichtungen erfolgen.

Die Abschlusseinrichtung weist wenigstens zwei weitere elektrische Versorgungsleitungen auf, die zum Herstellen einer Verbindung mit einer Stromquelle bzw. zum Anschließen an eine Stromquelle vorgesehen sind. Es versteht sich, dass es sich bei den weiteren Versorgungsleitungen wenigstens abschnittsweise insbesondere um stromführende Leiter bzw. Innenleiter bzw. Seelen eines Versorgungskabels handeln kann, die besonders bevorzugt stromführenden Leiter bzw. Innenleiter eines einzigen Versorgungskabels sind.

Es versteht sich, dass jeder der Stromleiter-Endabschnitte z.B. auch in Form eines stromleitenden Kontakts eines Steckers oder Gegensteckers ausgebildet sein kann. Es versteht sich auch, dass jeder der Versorgungsleiter-Endabschnitte auch in Form eines stromleitenden Kontakts eines entsprechenden Gegensteckers bzw. Steckers ausgebildet sein kann, so dass durch Verbinden der Abschlusseinrichtung mit dem Endabschnitt des Grundkörpers auch Steckerverbindungen ausbildbar sein können, um die elektrisch leitende Kontaktierung bzw. die elektrische leitende Verbindung zwischen den Versorgungsleiter-Endabschnitten und den Stromleiter-Endabschnitten zu realisieren.

Durch Verbinden der Abschlusseinrichtung mit dem Endabschnitt des Grundkörpers ist jeweils ein Versorgungsleitungs-Endabschnitt jeder der weiteren Versorgungsleiter mit jeweils einem Stromleiter-Endabschnitt der Stromleiter-Endabschnitte elektrisch leitend kontaktierbar, die bei dem weiteren Kanal in dem Kanal-Endabschnitt des Endabschnitts mit wenigstens einem Teilabschnitt angeordnet sind. Diese Kontaktierbarkeit kann in einer dem Fachmann geläufigen Weise insbesondere durch geeignete Anordnung der weiteren Versorgungsleitungs-Endabschnitte erfolgen. So kann z.B. jeder der weiteren Versorgungsleitungs-Endabschnitte bei bestehender Verbindung zwischen Grundkörper und Abschlusseinrichtung insbesondere in den Kanal des Grundkörpers hineinragen, um die Kontaktierung zu den Stromleiter-Endabschnitten, die jeweils mit wenigstens einem Teilabschnitt in dem Kanal angeordnet sind, zu realisieren.

Jeder Stromleiter zur Stromversorgung der Anzeigeeinrichtungen weist zwei Stromleiter-Endabschnitte auf, von denen jeweils einer in einem der beiden entgegengesetzten Kanal-Endabschnitte mit wenigstens einem Teilabschnitt angeordnet ist. Der jeweilige Stromleiter-Endabschnitt ist also mit wenigstens einem Teilabschnitt in einem der beiden entgegengesetzten Kanal-Endabschnitte angeordnet, so dass also der jeweilige Stromleiter-Endabschnitt insbesondere auch vollständig bzw. zur Gänze in dem jeweiligen Kanal-Endabschnitt angeordnet sein kann bzw. in dem Kanal angeordnet sein kann, und zwar ohne aus dem Kanal-Endabschnitt herauszuragen. Erfindungsgemäß kann jedoch auch vorgesehen sein, dass nur ein Teilabschnitt des jeweiligen Stromleiter-Endabschnitts in dem Kanal-Endabschnitt angeordnet ist, so dass ein weiterer Teilabschnitt des jeweiligen Stromleiter-Endabschnitts also insbesondere auch außerhalb des jeweiligen Kanal-Endabschnitts angeordnet sein kann bzw. aus dem jeweiligen Kanal-Endabschnitt herausragen kann.

Bei einer bevorzugten Ausführungsform des Systems des erfindungsgemäßen Warenpräsentationssystems weist die Abschlusseinrichtung einen Flachkörper aus einem Kunststoffmaterial mit zwei entgegengesetzten Seiten und einen mit einem der beiden Seiten verbundenen Einsteckkörper aus einem Kunststoffmaterial auf, der zum Einstecken in den Kanal vorgesehen ist, in dem die wenigstens ein Signalisierungseinrichtung angeordnet ist, wobei der Einsteckköper zum Verbinden der Abschlusseinrichtung mit dem Endabschnitt des Grundkörpers durch stirnseitiges Einstecken in den Kanal in dem Kanal kraftschlüssig aufnehmbar ist.

Mittels dieser Abschlusseinrichtung kann auf sehr einfache und praktische Weise eine Verbindung der Versorgungsleitungs-Endabschnitte mit den Stromleiter-Endabschnitten durch einen einfachen Einsteckvorgang realisiert werden. Das Vorsehen des Flachkörpers ermöglicht vorteilhaft eine gewichtseinsparende und optisch ansprechende Ausbildung des Flachkörpers. Der Einsteckköper ist zum Verbinden der Abschlusseinrichtung mit dem Endabschnitt des Grundkörpers durch stirnseitiges Einstecken in den Kanal in dem Kanal kraftschlüssig aufnehmbar bzw. zur Gänze oder wenigstens teilweise aufnehmbar bzw. der Einsteckköper ist zum Verbinden der Abschlusseinrichtung mit dem Endabschnitt des Grundkörpers durch stirnseitiges Einstecken in den Kanal in dem Kanal besonders bevorzugt klemmend haltbar bzw. unter Ausbildung einer Klemmspannung in dem Kanal haltbar. Es versteht sich, dass die mittels dieser bevorzugten Ausführungsform realisierbare Verbindung zwischen der Abschlusseinrichtung und dem Grundkörper besonders bevorzugt eine lösbare bzw. manuell lösbare Verbindung sein kann. Der Einsteckkörper kann also besonders bevorzugt aus dem Kanal herausziehbar sein bzw. manuell aus dem Kanal herausziehbar sein. Durch die vorzugsweise vorgesehene Lösbarkeit der Verbindung zwischen der Abschlusseinrichtung und dem Grundkörper können vorteilhaft insbesondere Wartungsarbeiten bzw. Reparaturen auf einfache und praktische Weise vorgenommen werden.

Bei dem Kunststoffmaterial, aus dem der Flachkörper und der Einsteckkörper bestehen kann, kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Besonders praktisch weist die Abschlusseinrichtung vorzugsweise einen weiteren Einstecckörper auf, der zum Einstecken in den weiteren Kanal vorgesehen ist, wobei der weitere Einsteckköper zum Verbinden der Abschlusseinrichtung mit dem Endabschnitt des Grundkörpers durch stirnseitiges Einstecken in den weiteren Kanal, in dem weiteren Kanal kraftschlüssig aufnehmbar ist. So kann besonders vorteilhaft durch einen einfach vorzunehmenden Verbindungsvorgang, bei welchem die beiden Einsteckkörper in den jeweiligen Kanal eingesteckt werden für die Stromversorgung der Anzeigeeinrichtungen und der Signalisierungseinrichtung bzw. den Signalisierungseinrichtungen eine Kontaktierung zu allen Stromleitern hergestellt werden.

Die mit den Stromleiter-Endabschnitten kontaktierbaren Versorgungsleitungs-Endabschnitte sind besonders bevorzugt an dem Einsteckköper vorgesehen. Da der Einsteckkörper in dem Kanal durch Einstecken kraftschlüssig aufnehmbar ist, können durch das Vorsehen der Versorgungsleitungs-Endabschnitte an dem Einsteckkörper vorteilhaft auch stabile elektrisch leitende Kontaktierungen der Versorgungsleitungs-Endabschnitte mit den Stromleiter-Endabschnitten realisiert werden. Dementsprechend sind auch die mit den jeweiligen Stromleiter-Endabschnitten kontaktierbaren weiteren Versorgungsleiter-Endabschnitte, besonders bevorzugt an dem weiteren Einsteckkörper vorgesehen, um die stabilen elektrisch leitenden Kontaktierungen für die Bestromung der Anzeigeeinrichtungen vorteilhaft realisieren zu können.

Besonders bevorzugt ist die Stirnseite des Grundkörpers durch stirnseitiges Einstecken des Einsteckkörpers in den Kanal von dem Flachelement bedeckbar. Durch die hiermit bereitgestellte Bedeckungsmöglichkeit kann ein optisch sehr ansprechender Abschluss geschaffen werden. Insbesondere kann das Flachelement eine Ausbildung aufweisen, die vorteilhaft durch stirnseitiges Einstecken des Einsteckkörpers in den Kanal bündig an den Grundkörper anschließbar ist, einhergehend mit der Schaffung eines optisch sehr ansprechenden Abschlusses.

Die obige praktische Ausführungsform des Systems des erfindungsgemäßen Warenpräsentationssystems ist besondere vorteilhaft für die Anordnung bzw. Anbringung in Umgebung bzw. in naher Umgebung von Ablagevorrichtungen, wie Regalböden von Warenregalen vorgesehen, so dass ein Käufer bzw. ein potentieller Käufer einer Ware direkt die der Ware jeweils zugordnete Anzeigeeinrichtung identifizieren kann.

Bei dem Grundkörper handelt es sich vorteilhaft um einen extrudierten Grundkörper aus einem Kunststoffmaterial, also einen durch Extrusion hergestellten Grundkörper. Mittels Extrusion können im Rahmen einer automatisierten Fertigung eine Vielzahl von Grundkörpern mit gleichbleibender hoher Qualität gefertigt werden. Bei dem Kunststoffmaterial, aus dem der längliche Grundkörper besteht, kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Besonders praktisch ist Abschlusseinrichtung mit wenigstens einem der beiden entgegengesetzten Endabschnitte des Grundkörpers lösbar verbindbar.

Die Erfindung betrifft ein Warenpräsentationssystem umfassend ein oben definiertes System und wenigstens ein Warenregal mit wenigstens zwei Haltepfosten und wenigstens einer Ablagevorrichtung, wobei der Grundkörper der Einrichtung an der Ablagevorrichtung anbringbar ist, wobei die Ablagevorrichtung ein Ablageelement zum Ablegen von Waren und zwei Halteelemente aufweist, wobei die Halteelemente mit dem Ablageelement verbunden sind, wobei jeder Haltepfosten wenigstens eine Aufnahme aufweist, in welche jeweils eines der Halteelemente zum Halten der Ablagevorrichtung an den Haltepfosten aufnehmbar ist, wobei wenigstens einer der Haltepfosten wenigstens zwei elektrische Leiter, bevorzugt wenigstens vier elektrische Leiter aufweist, die zum Anschließen an eine Stromquelle vorgesehen sind, wobei wenigstens eines der Haltelemente wenigstens zwei elektrische Anschlusselemente aufweist, wobei an jedes Anschlusselement jeweils eine der Versorgungsleitungen bzw. jeweils einer aller Versorgungsleitungen der Abschlusseinrichtung anschließbar ist, wobei jedes Anschlusselement durch Aufnehmen des Halteelements in der Aufnahme des Haltepfostens mit jeweils einem der Leiter des Haltepfostens elektrisch leitend kontaktierbar ist.

Das erfindungsgemäße Warenpräsentationssystem ist so vorgesehen, dass es die Vorteile des obigen Systems mit wenigstens zwei Haltepfosten und wenigstens einer Ablagevorrichtung kombiniert. Die Haltepfosten und die wenigstens eine Ablagevorrichtung des Warenregals, zeichnen sich dadurch aus, dass über die elektrischen Leiter der Haltepfosten und die elektrischen Anschlusselemente der Halteelemente nach Anschließen der Versorgungsleitungen der Abschlusseinrichtung an die Anschlusselemente durch einfach vornehmbares Aufnehmen der Haltelemente in den Aufnahmen der Haltepfosten - und zwar zum Halten bzw. Anbringen der Ablagevorrichtung an den Haltepfosten - und nachfolgendes Anschließen der Leiter des Haltepfostens an eine Stromquelle elektrisch leitende Verbindungen der Versorgungsleitungen der Abschlusseinrichtung zu der Stromquelle herstellbar sind, und zwar zum Bestromen bzw. zur Spannungsversorgung von in dem weiteren Kanal des Grundkörpers des erfindungsgemäßen Systems aufgenommenen elektronischen Anzeigeeinrichtungen und/oder der in dem Kanal bzw. dem ersten Kanal des Grundkörpers angeordneten Signalisierungseinrichtung bzw. Signalisierungseinrichtungen.

Jeder Haltepfosten weist wenigstens eine Aufnahme oder mehrere Aufnahmen aufweist, in welche jeweils eines der Halteelemente zum Halten der Ablagevorrichtung an den Haltepfosten aufnehmbar ist. Insbesondere kann jedes der Halteelemente einen in die jeweilige Aufnahme einhängbaren Endbereich aufweisen, wobei die elektrischen Anschlusselemente an dem Endbereich vorgesehen sein können. Insbesondere können die Leiter der Haltepfosten in einem Längskanal des Haltepfostens angeordnet sein, wobei im eingehängten Zustand des Endbereichs für jedes Anschlusselement ein elektrisch leitender Kontakt zu dem jeweiligen elektrischen Leiter des Haltepfostens vorliegt.

Der längliche Grundkörper des erfindungsgemäßen Systems ist an der Ablagevorrichtung anbringbar bzw. mit der Ablagevorrichtung verbindbar. Insbesondere kann der längliche Grundkörper bei einer länglich ausgebildeten Ablagevorrichtung besonders bevorzugt an der Ablagevorrichtung in einer Anordnung anbringbar sein, bei welcher eine sich entlang der Längsachse des Grundkörpers erstreckende Fläche des Grundkörpers einer sich entlang der Längsachse des Ablageelements erstreckenden Fläche des Ablageelements zugewandt ist. Oder in anderen Worten: Insbesondere kann der längliche Grundkörper bei einer länglich ausgebildeten Ablagevorrichtung besonders bevorzugt derart an der Ablagevorrichtung anbringbar sein, dass eine sich entlang der Längsachse des Grundkörpers erstreckende Fläche des Grundkörpers einer sich entlang der Längsachse des Ablageelements erstreckenden Fläche des Ablageelements zugewandt ist. In dieser Anordnung, in welcher sich der Kanal des Grundkörpers des Systems besonders bevorzugt parallel zur Längsachse des Ablageelements erstreckt, kann bei einer reihenförmigen Anordnung einer Mehrzahl von Signalisierungseinrichtungen in dem Kanal vorteilhaft eine Anordnung bzw. Anbringung der Einrichtung an der Ablagevorrichtung des Warenregals realisiert werden, bei welcher jeweils eine Signalisierungseinrichtung jeweils einem Abschnitt der Ablagevorrichtung zugeordnet sein kann bzw. für diesen Abschnitt zuständig sein kann. So kann vorteilhaft für eine Vielzahl von auf der Ablagevorrichtung angeordneten bzw. abgelegten Waren jeweils eine warenspezifische bzw. warentypspezifische Analyse, die für eine Ermittlung des warenspezifischen Kaufverhaltens herangezogen werden kann, unter Verwendung der jeweiligen Signalisierungseinrichtung realisiert werden.

Besonders praktisch sind die Halteelemente mit dem Ablageelement lösbar verbunden Nachfolgend werden Ausführungsbeispiele der Erfindung anhand der beigefügten Zeichnung näher erläutert. In der Zeichnung zeigt
- Fig. 1: eine schematische Darstellung eines nicht erfindungsgemäßen Warenpräsentationssystems,

- Fig. 2: eine schematische Darstellung der Einrichtung und des Systems nach Fig. 1, bei welcher die Abschlusseinrichtung mit der Einrichtung verbunden ist,
- Fig. 3: eine schematische Darstellung eines ersten Ausführungsbeispiels eines Systems der erfindungsgemäßen Warenpräsentationssystems,

- Fig. 4: eine schematische Darstellung eines ersten Ausführungsbeispiels eines erfindungsgemäßen Warenpräsentationssystems,
- Fig. 5: eine schematische Darstellung eines zweiten Ausführungsbeispiels eines erfindungsgemäßen Warenpräsentationssystems,
- Fig. 6: eine Schnittdarstellung einer Einrichtung eines dritten Beispiels eines Systems,
- Fig. 7: die Darstellung nach Fig. 6 mit einer Anzeigeeinrichtung,
- Fig. 8: eine dreidimensionale Darstellung einer Abschlusseinrichtung des dritten Beispiels des Systems,
- Fig. 9A: eine dreidimensionale Darstellung der Einrichtung nach Fig. 6 zusammen mit einer mit dem Grundkörper verbundenen Abschlusseinrichtung nach Fig. 8, und
- Fig. 9B: den Grundkörper nach Fig. 9A ohne Abschlusseinrichtung.

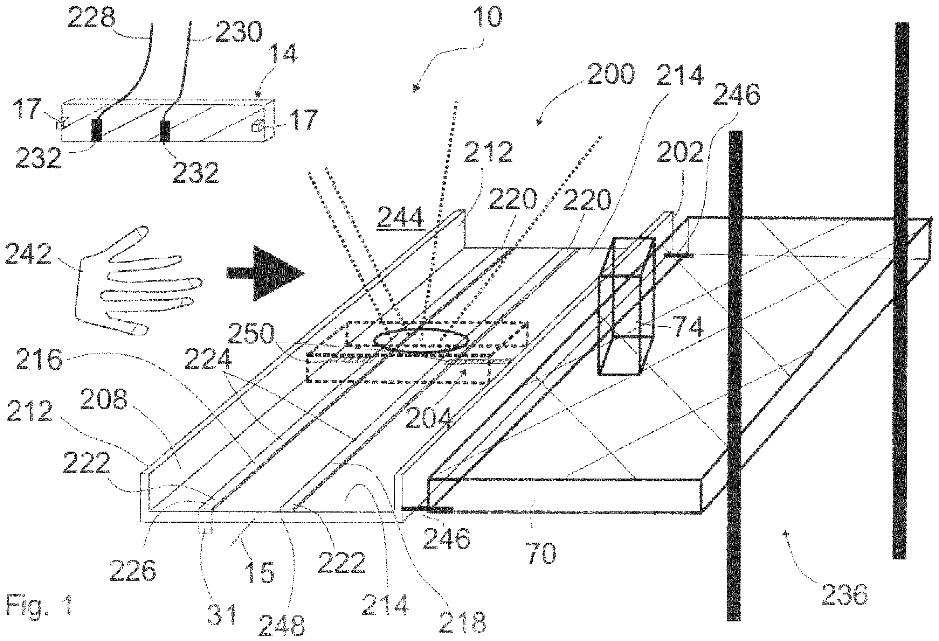

Die Einrichtung 200 nach Fig. 1 umfasst einen länglichen extrudierten Grundkörper 202 aus einem Kunststoffmaterial zum Anbringen an einer Ablagevorrichtung 70 eines Warenregals 236 und mehrere an dem Grundkörper 202 angebrachte Signalisierungseinrichtungen 204, von denen der Übersichtlichkeit halber nur eine dargestellt ist.

Der Grundkörper 202 weist einen sich über die gesamte Länge des Grundkörpers 202 erstreckenden Kanal 208 auf. Die Signalisierungseinrichtung 204 sind in dem Kanal 208 unter Ausbildung einer sich entlang der Längsachse 15 des Grundkörpers 202 erstreckenden Reihe in dem Kanal 208 angeordnet bzw. aufeinanderfolgend angeordnet.

Jede der Signalisierungseinrichtungen 204 ist zum Signalisieren einer sich der Ablagevorrichtung 70 nähernden Handbewegung einer menschlichen Hand 242 vorgesehen bzw. eingerichtet und/oder zum Signalisieren einer sich von der Ablagevorrichtung 70 entfernenden Handbewegung einer menschlichen Hand 242 vorgesehen bzw. eingerichtet.

Jede der Signalisierungseinrichtungen 204 ist in Form eines Bewegungsmelders mit einem PIR-Sensor ausgebildet, wobei auch der von jedem Bewegungsmelder 204 erfassbare bzw. erzeugbare dreidimensionale Erfassungsbereich 244 (vgl. auch punktierte Linien) schematisch dargestellt ist. In diesem Erfassungsbereich 244 muss die jeweilige Handbewegung stattfinden, damit die jeweilige Signalisierungseinrichtung 204 die jeweilige Handbewegung signalisieren kann, und zwar wenn die Einrichtung 200 - wie hier veranschaulicht - an der Ablagevorrichtung 70 angebracht bzw. mit dieser verbunden ist (und zwar hier durch nur sehr schematisch dargestellte Halteelemente 246, die zum Halten bzw. Anbringen an der Ablagevorrichtung 70 in Aufnahmen der Ablagevorrichtung 70 aufnehmbar sind bzw. aufgenommen sind). Der Erfassungsbereich 244 befindet sich also in dem räumlichen Gebiet, in welchem sich eine menschliche Hand 242 zum Ergreifen bzw. Entnehmen einer auf der Abstellvorrichtung 70 abgelegten Ware 74 bewegt und in welchem sich die menschliche Hand 242 z.B. nach einer Warenentnahme von der Ablagevorrichtung 70 entfernend bewegt.

Die Einrichtung 200 und die Ablagevorrichtung 70 bilden in der in Fig. 1 veranschaulichten Verbindungssituation auch eine Komponente 248 für ein Warenregal 236 umfassend die Einrichtung 200 und die Ablagevorrichtung 70, wobei die Einrichtung 220 an der Ablagevorrichtung 70 angebracht ist bzw. mit dieser verbunden ist.

Die Fig. 1 veranschaulicht auch ein erfindungsgemäßes System 10 mit der Einrichtung 200 und einer Abschlusseinrichtung 14, wobei der Grundkörper 202 der Einrichtung 200 zwei entgegengesetzte Endabschnitte 212 aufweist, wobei jeder der Endabschnitte 212 einen von zwei entgegengesetzten Kanal-Endabschnitten 214 des Kanals 208 aufweist.

Das System 10 weist ferner zwei Stromleiter 216, 218 zur Stromversorgung jeder der Signalisierungseinrichtungen 204 über eine Parallelschaltung auf. Hierfür weist jede Signalisierungseinrichtungen 204 zwei Stromversorgungskontakte 250 auf und hierfür ist jeweils einer der Stromleiter 216, 218 an jeweils einem der Stromversorgungskontakte 250 elektrisch leitend angeschlossen.

Jeder der Stromleiter 216, 218 weist zwei Stromleiter-Endabschnitte 220, 222 und einen Zwischenabschnitt 224 auf. Der Zwischenabschnitt 224 jedes Stromleiters 216, 218 ist in dem Kanal 208 angeordnet und von jedem Stromleiter 216, 218 ist jeweils einer der Stromleiter-Endabschnitte 220, 222 in jeweils einem der beiden entgegengesetzten Kanal-Endabschnitte 214 angeordnet. Also so ist z.B. bei dem Stromleiter 216 der Stromleiter-Endabschnitt 220 in einem der beiden Kanal-Endabschnitte 214 angeordnet und der Stromleiter-Endabschnitt 222 ist in dem anderen der beiden Kanal-Endabschnitte 214 angeordnet.

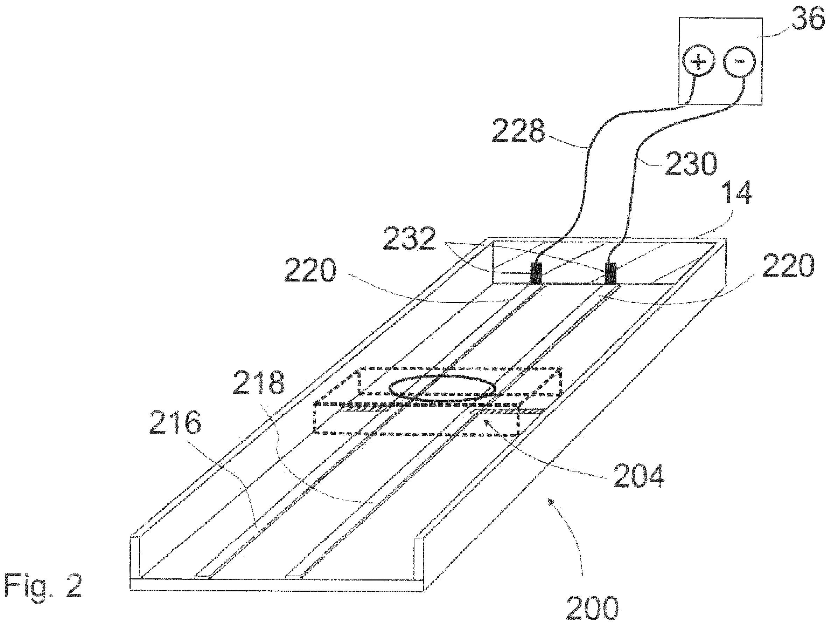

Die Abschlusseinrichtung 14 des Systems 10 weist zwei elektrische Versorgungsleitungen 228, 230 auf, die zum Herstellen einer Verbindung mit einer Stromquelle 36 (vgl. Fig. 2) vorgesehen sind. Die Abschlusseinrichtung 14 ist mit jedem der beiden entgegengesetzten Endabschnitte 212 des Grundkörpers 202 verbindbar.

Durch Verbinden der Abschlusseinrichtung 14 mit dem Endabschnitt 212 des Grundkörpers 202 ist jeweils ein Versorgungsleitungs-Endabschnitt 232 jeder der Versorgungsleitungen 228, 230 mit jeweils einem Stromleiter-Endabschnitt 220, 222 der Stromleiter-Endabschnitte 220, 222 elektrisch leitend kontaktierbar, die in dem Kanal-Endabschnitt 214des Endabschnitts 212 des Grundkörpers 202angeordnet sind.

Die Fig. 2 veranschaulicht hierbei den Zustand, in welchem die Abschlusseinrichtung 14 mit dem hinteren Endabschnitt 212 verbunden ist, wobei die Kontaktierung der Versorgungsleiter-Endabschnitte 232 mit den Stromleiter-Endabschnitten 220 bei diesem Ausführungsbeispiel jeweils durch Kontaktierung der Versorgungsleiter-Endabschnitte 232 mit der Stirnseiten des jeweiligen Stromleiter-Endabschnitts 220 erfolgt.

Zur Realisierung einer kraftschlüssigen Verbindung der Abschlusseinrichtung 14 mit dem jeweiligen Grundkörper-Endabschnitt 212 weist die Abschlusseinrichtung 14 zwei Einsteckzapfen 17 auf, die in Aufnahmen (nicht dargestellt) einsteckbar sind, die stirnseitig an den Endabschnitten 212 des Grundkörpers 12 vorgesehen sind (nicht dargestellt).

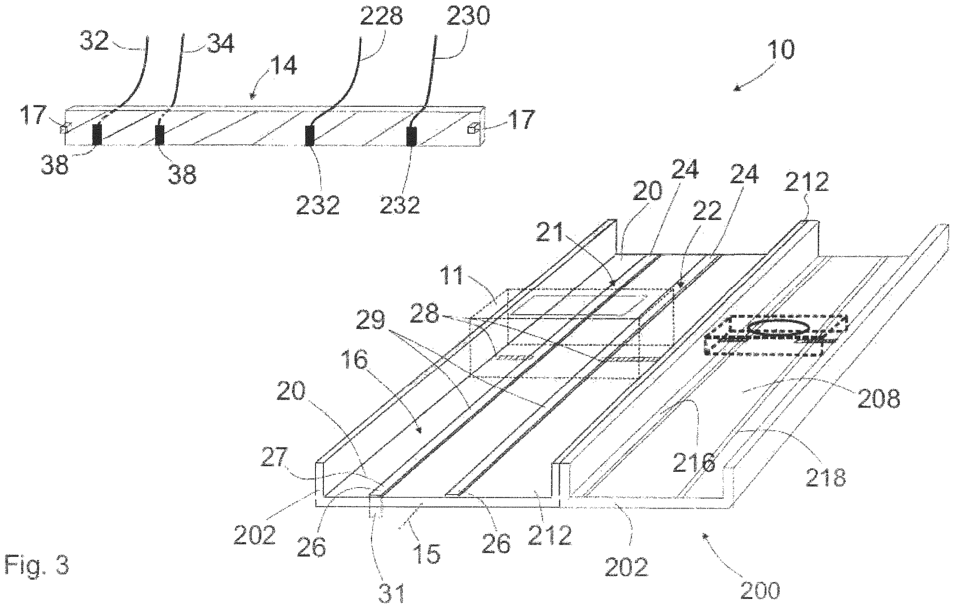

Bei dem System 10 nach Fig. 3 weist der längliche extrudierte Grundkörper 202 der Einrichtung 200 einen weiteren Kanal 16 bzw. zweiten Kanal 16 auf, wobei in dem weiteren Kanal mehrere elektronische Anzeigeeinrichtungen 11 zur Anzeige von warenbezogenen Informationen aufnehmbar sind (in der Fig.3 ist nur eine schematisch veranschaulicht), und wobei sich der weitere Kanal 16 über die gesamte Länge des Grundkörpers 202 erstreckt, wobei jeder der Endabschnitte 212 des Grundkörpers 202 einen von zwei entgegengesetzten Kanal-Endabschnitten 20 des weiteren Kanals 16 aufweist.

Die Anzeigeeinrichtungen 11 sind in dem weiteren Kanal 16 aufnehmbar. Das System nach Fig. 3 weist ferner wenigstens zwei Stromleiter 21, 22 zur Stromversorgung der Anzeigeeinrichtungen 11 auf.

Die Anzeigeeinrichtungen 11 sind in dem Kanal 16, der zu beiden Stirnseiten und zu einer Längsseite hin offen bzw. zugänglich ist, entlang der Längsachse 15 des Grundkörpers 202 aufeinanderfolgend in dem Kanal 16 aufnehmbar bzw. unter Ausbildung einer sich entlang der Längsachse 15 des Grundkörpers 202 erstreckenden Reihe in dem Kanal 16 aufnehmbar bzw. aufeinanderfolgend aufnehmbar. Die Anzeigeeinrichtungen 11 können von der Längsseite her in dem Kanal 16 kraftschlüssig aufgenommen werden bzw. die Anzeigeeinrichtungen 11 können von der Längsseite her in dem Kanal 16 klemmend aufgenommen werden.

Jeder der Stromleiter 21, 21 zur Stromversorgung der Anzeigeeinrichtungen 11 weist zwei Stromleiter-Endabschnitte 24, 26 und einen Zwischenabschnitt 29 auf. Der Zwischenabschnitt 29 jedes Stromleiters 21, 22 ist in dem weiteren Kanal 16 angeordnet und von jedem Stromleiter 21,22 ist jeweils einer der Stromleiter-Endabschnitte 24, 26 in jeweils einem der beiden entgegengesetzten Kanal-Endabschnitte 20 des weiteren Kanals 16 angeordnet.

Durch Aufnehmen der Anzeigeeinrichtungen 11 in dem weiteren Kanal 16 ist jeweils ein Stromversorgungskontakt 28 jeder Anzeigeeinrichtung 11 mit jeweils einem der Stromleiter 21, 22 elektrisch leitend kontaktierbar.

Die Abschlusseinrichtung 14 des Systems 10 nach Fig. 3 weist zwei weitere elektrische Versorgungsleitungen 32, 34 auf, die zum Herstellen einer Verbindung mit einer Stromquelle vorgesehen sind. Durch Verbinden der Abschlusseinrichtung 14 mit jedem der der Endabschnitte 212 des Grundkörpers 202 ist auch jeweils ein Versorgungsleitungs-Endabschnitt 38 jeder der weiteren Versorgungsleitungen 32, 34 mit jeweils einem Stromleiter-Endabschnitt 24, 26 der Stromleiter-Endabschnitte 24, 26 elektrisch leitend kontaktierbar ist, die in dem Kanal-Endabschnitt 20 des jeweiligen Grundkörper-Endabschnitts 212 angeordnet sind.

Die Stromleiter 21, 22, 216 und 218 sind bei den obigen Ausführungsbeispielen in dem Kanal 208 bzw. dem weiteren Kanal 16 angeordnet bzw. vollständig bzw. zur Gänze angeordnet sind. Jeder Stromleiter 21, 22, 216 und 218 ist in Form einer geradlinigen Leiterbahn 21, 22, 216 und 218 ausgebildet. Jede Leiterbahn 21, 22, 216 und 218 ist auf den Grundkörper 12 aufextrudiert.

Die Stromleiter 21, 22, 216 und 218 weisen die Stromleiter-Endabschnitte 24, 26, 220 und 222 und die Zwischenabschnitt 29 und 224 auf, wobei die jeweiligen Stromleiter-Endabschnitte durch den jeweiligen Zwischenabschnitt miteinander verbunden sind. Der jeweilige Zwischenabschnitt ist im den jeweiligen Kanal angeordnet und die Stromleiter-Endabschnitte sind in dem jeweiligen Kanal-Endabschnitt angeordnet bzw. vollständig oder zur Gänze angeordnet. Allerdings ist erfindungsgemäß selbstverständlich eine Beschränkung auf ein Anordnung bzw. eine vollständige Anordnung der Stromleiter-Endabschnitte in dem jeweiligen Kanal-Endabschnitt nicht vorgesehen. So kann wenigstens einer der Stromleiter-Endabschnitte bei einem alternativen Ausführungsbeispiel auch z.B. mit einem Teilabschnitt 31 außerhalb des jeweiligen Kanals angeordnet sein und mit einem Teilabschnitt 27, 226 in dem jeweiligen Kanal-Endabschnitt 20 angeordnet sein - wie es in Fig. 1 und 3 schematisch veranschaulicht ist.

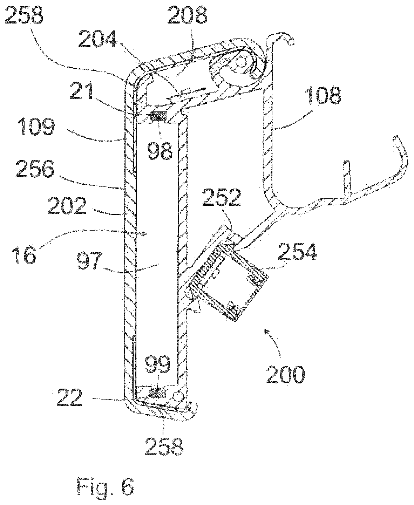

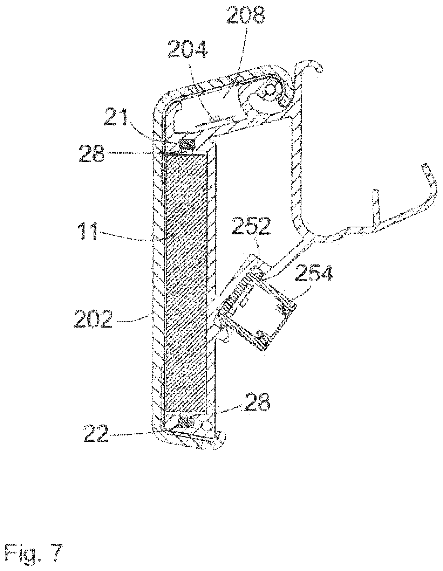

Der Grundkörper 202 nach Fig. 6 eines dritten Ausführungsbeispiels eines erfindungsgemäßen Systems 10 unterscheidet sich von dem Grundkörper 202 nach Fig. 3 im Wesentlichen dadurch, dass der weitere bzw. zweite Kanal 16 des extrudierten Grundkörpers 202 drei zusammenhängende Teilbereiche 97, 98 und 99 umfasst, die im Querschnitt rechteckförmig ausgebildet sind. In den jeweils kleineren Teilbereichen 98, 99 ist jeweils ein Stromleiter 21,22 zur Stromversorgung der Anzeigeeinrichtungen angeordnet. In der Schnittdarstellung nach Fig. 7 ist die elektrisch leitende Kontaktierung der Stromleiter 21, 22 mit den Stromversorgungskontakten 28 einer Anzeigeeinrichtung 11 veranschaulicht, die in dem weiteren Kanal 16 aufgenommen ist.

Ferner weist der Grundkörper 202 nach den Fig. 6 und 7 einen ersten Kanal 208 auf, in dem eine Mehrzahl von Signalisierungseinrichtungen 204 reihenförmig in Längsrichtung des Grundkörpers 202 aufeinanderfolgend angeordnet ist. In einem dritten Kanal 252 ist eine Langleuchte 254 zum Beleuchten benachbarter Ablagevorrichtungen angebracht und angeordnet. Die Kanäle 208 und 252 sind jeweils zu einer Längsseite des Grundkörpers 202 hin offen ausgebildet. Über den klauenartigen Bereich 108 ist der Grundkörper 202 an eine Ablagevorrichtung eines Warenpräsentationssystems anhängbar ausgebildet. Das System 10 nach den Fig. 6 und 7 weist ferner ein extrudiertes Bedeckungselement 109 zum Bedecken der Kanäle 16, 208 und 252 auf. Das Bedeckungselement umfasst einen durchsichtigen Teilbereich 256 und zwei undurchsichtige Teilbereiche 258.

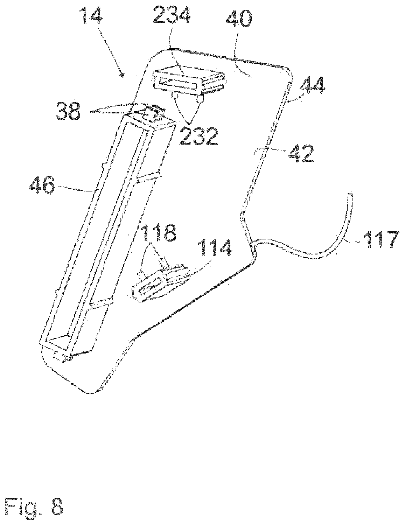

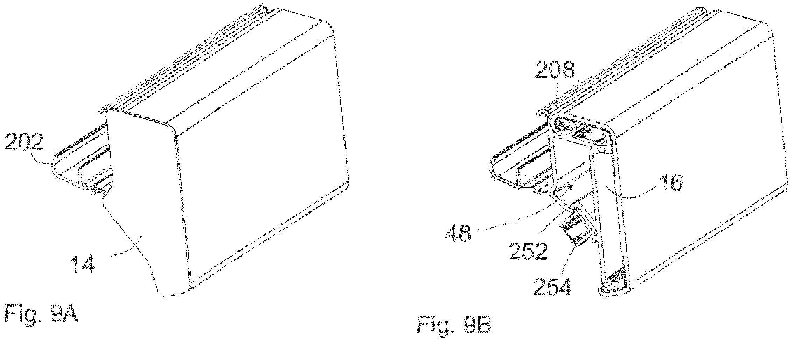

Die Abschlusseinrichtung 14 (vgl. Fig. 8) des Systems mit dem Grundkörper 202 nach den Fig. 7 und 8 weist einen Flachkörper 40 aus einem Kunststoffmaterial mit zwei entgegengesetzten Seiten 42 und 44 und einen mit der Seite 42 verbundenen Einsteckkörper 46 aus einem Kunststoffmaterial auf. Der Einsteckköper 46 ist zum Verbinden der Abschlusseinrichtung 14 mit einem Endabschnitt 212 des Grundkörpers 202 durch stirnseitiges Einstecken in den weiteren Kanal 16 in dem Kanal 16 kraftschlüssig aufnehmbar - vgl. hierzu auch Fig. 9A. Die mit den jeweiligen Stromleiter-Endabschnitten des weiteren Kanals 16 kontaktierbaren Versorgungsleitungs-Endabschnitte 38 sind an dem Einsteckköper 46 vorgesehen, wobei bei diesem Ausführungsbeispiel sowohl der obere als auch der untere Versorgungsleitungs-Endabschnitt 38 jeweils in Form eines Doppel-Kontakts ausgebildet sind.

Die Abschlusseinrichtung 14 nach Fig. 8 weist ferner einen zweiten und einen dritten Einsteckkörper 234, 114 auf. Der zweite Einsteckköper 234 weist zwei Versorgungsleitungs-Endabschnitte 232 in Form von Kontaktierungselementen 232 für die Stromversorgung der Signalisierungseinrichtungen 204 auf, die durch Einstecken des Einsteckkörpers 112 in den Kanal 208 mit den entsprechenden Stromleiter-Endabschnitten kontaktierbar sind. Die Kontaktierungselemente 232 selbst sind wiederum jeweils elektrisch leitend mit jeweils einer Leitung verbunden, die abschnittsweise in einer Ummantelung eines Kabel 117 aufgenommen ist, in dem auch die Versorgungsleitungen für die Stromversorgung der Anzeigeeinrichtungen und der Langleuchte 254 abschnittsweise aufgenommen sind. Entsprechendes trifft auch für den dritten Einsteckkörper 114 zu. Der dritte Einsteckköper 114 weist zwei Anschlusselemente 118 für die Spannungsversorgung der Langleuchte 254 auf, die mit nicht dargestellten Versorgungsleitungen der Langleuchte 254, die in dem Kanal 252 angeordnet sind, durch Einstecken des Einsteckkörpers 114 in den Kanal 252 kontaktierbar sind. Die Anschlusselemente 118 selbst sind wiederum jeweils elektrisch leitend mit jeweils einer Leitung verbunden, die abschnittsweise in der Ummantelung des Kabels 117 aufgenommen ist. Sämtliche in der Ummantelung des Kabels 117 abschnittsweise aufgenommenen Leitungen können bei einem erfindungsgemäßen Warenpräsentationssystem über jeweilige an wenigstens einem Halteelement vorgesehene Anschlusselemente durch Aufnehmen des Halteelements in der jeweiligen Aufnahme des Haltepfostens bestromt werden, und zwar zur Stromversorgung der Anzeigeeinrichtungen 11, der Signalisierungseinrichtungen 204 und der Langleuchte 254.

Optisch sehr ansprechend ist die Stirnseite 48 des Grundkörpers 202 (vgl. Fig. 9Aund 9B) durch stirnseitiges Einstecken des Einsteckkörpers 46 und der Einsteckkörper 112 und 114 in die Kanäle 16, 204 und 252 von dem Flachkörper 40 der Abschlusseinrichtung 14 bedeckbar.

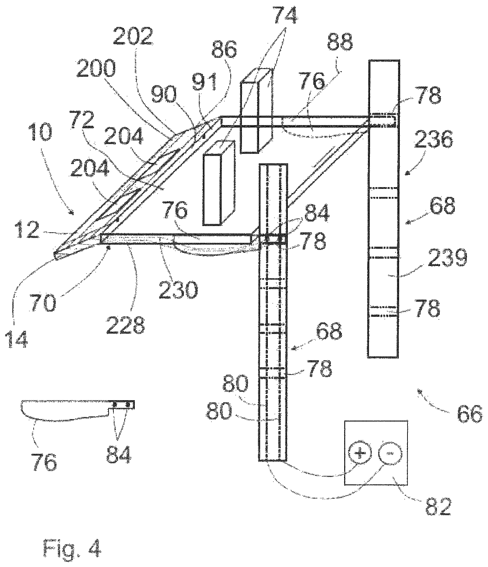

Das Warenpräsentationssystem 66 nach Fig. 4 umfasst ein erfindungsgemäßes System 10 und ein Warenregal 236 mit zwei Haltepfosten 68 und eine Ablagevorrichtung 70, wobei bei alternativen Ausführungsbeispielen selbstverständlich auch eine höhere Anzahl von Haltepfosten und Ablagevorrichtungen vorgesehen sein können.

Die Ablagevorrichtung 70 weist ein Ablageelement 72 zum Ablegen von Waren 74 und zwei Halteelemente 76 auf.

Die Halteelemente 76 sind mit dem Ablageelement 72 lösbar verbunden, und zwar durch nicht dargestellte Aufnahmen an dem Ablageelement 72, in welche nicht dargestellte Laschen der Halteelemente 76 einführbar sind.

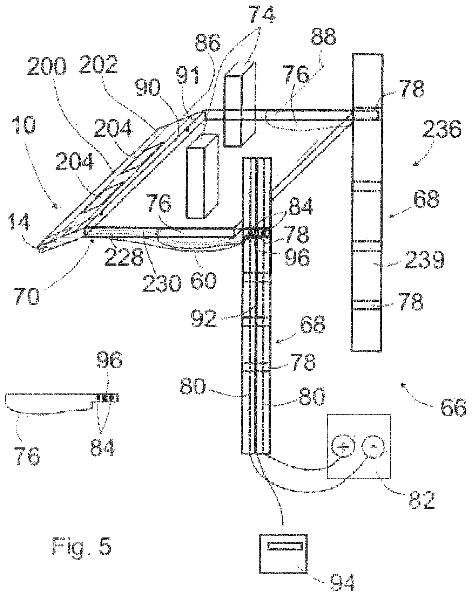

Jeder Haltepfosten 68 weist vier Aufnahme 78 auf, wobei in jeder der Aufnahmen 78 jeweils eines der Halteelemente 76 zum Halten der Ablagevorrichtung 70 an den Haltepfosten 68 aufnehmbar ist. Die Fig. 5 veranschaulicht hierbei schon den Zustand, in welchem die Halteelemente 76 in jeweils einer von zwei gegenüberliegenden Aufnahmen 78 aufgenommen sind, wobei sich eine Aufnahme 78 an dem einen Haltepfosten 68 und die andere Aufnahmen 78 an dem anderen Haltepfosten 68 befindet.

Einer der beiden Haltepfosten 68 weist zwei elektrische Leiter 80 auf, die zum Anschließen an eine Stromquelle 82 vorgesehen sind.

Eines der Haltelemente 76 weist zwei elektrische Anschlusselemente 84 auf, wobei an jedes Anschlusselement 84 jeweils eine der Versorgungsleitungen 228 bzw. 230 der Abschlusseinrichtung 14 elektrisch leitend anschließbar ist.

Jedes Anschlusselement 84 ist durch Aufnehmen des Halteelements 76 in der jeweiligen Aufnahme 78 des Haltepfostens 68 mit jeweils einem der Leiter 80 des Haltepfostens 68 elektrisch leitend kontaktierbar.

Der längliche Grundkörper 202 der Systems 10 bzw. der Einrichtung 200 ist an der Ablagevorrichtung 70 anbringbar, wobei die Fig. 4 schon den angebrachten Zustand veranschaulicht. Das Ablageelement 72 ist länglich ausgebildet und der längliche Grundkörper 202 ist an der Ablagevorrichtung 70 in einer Anordnung anbringbar ist, bei welcher eine sich entlang der Längsachse 86 des Grundkörpers 202 erstreckende Fläche 90 des Grundkörpers 202 einer sich entlang der Längsachse 88 des Ablageelements 72 erstreckenden Fläche 91 des Ablageelements 72 zugewandt ist.

Das Warenpräsentationssystem 66 nach Fig. 5 unterscheidet sich von dem Warenpräsentationssystem 66 nach Fig. 4 dadurch, dass der Haltepfosten 68 zusätzlich eine Datenleitung 92 aufweist, die zum Anschließen an eine Datenquelle 94 vorgesehen ist. Das Haltelement 76 mit den elektrischen Anschlusselementen 84 weist zusätzlich einen Datenleitungsanschluss 96 auf, wobei an den Datenleitungsanschluss 96 eine Datenversorgungsleitung 60 einer Abschlusseinrichtung 14 einer Einrichtung 200 anschließbar ist. Der Datenleitungsanschluss 96 ist durch Aufnehmen des Halteelements 76 in der Aufnahme 78 des Haltepfostens 68 mit der Datenleitung 92 des Haltepfostens 68 datenübertragbar verbindbar. Die Datenversorgungsleitung 60 ist wiederum eine Datenversorgungsleitung 60 eines weiteren Ausführungsbeispiels einer Abschlusseinrichtung 14, die durch Verbinden mit einem Endabschnitt 202 der Einrichtung 200 auch eine datenübertragbare Verbindung mit wenigstens einer in dem Kanal 208 der Einrichtung 200 wenigstens abschnittsweise angeordneten Datenleitung herstellt, die für die Weiterleitung der von den Signalisierungseinrichtungen 204 ausgegebenen digitalen Signale für die Handbewegungs-Signalisierung vorgesehen ist. Über die Datenversorgungsleitung 60 können dann die digitalen Signale an die Datenquelle 94 übertragen werden.

### Bezugszeichenliste

10 System
11 Anzeigeeinrichtung
14 Abschlusseinrichtung
15 Längsachse
16 weiterer Kanal
17 Einsteckzapfen
20 Kanal-Endabschnitt
21 Stromleiter
22 Stromleiter
24 Stromleiter-Endabschnitt
26 Stromleiter-Endabschnitt
27 Teilabschnitt
28 Stromversorgungskontakt
29 Zwischenabschnitt
31 Teilabschnitt
32 Versorgungsleitung
34 Versorgungsleitung
36 Stromquelle
38 Versorgungsleitungs-Endabschnitt
40 Flachkörper
42 Seite
44 Seite
46 Einsteckkörper
48 Stirnseite
60 Datenversorgungsleitung
66 Warenpräsentationssystem
68 Haltepfosten
70 Ablagevorrichtung
72 Ablageelement
74 Ware
76 Halteelement
78 Aufnahme
80 Leiter
82 Stromquelle
84 Anschlusselement
86 Längsachse Grundkörper
88 Längsachse Ablageelement
90 Fläche
91 Fläche
92 Datenleitung Haltepfosten
94 Datenquelle
96 Datenleitungsanschluss
97 Teilbereich
98 Teilbereich
99 Teilbereich
108 Klauenartige Bereich
109 Bedeckungselement
114 Einsteckkörper
117 Kabel
118 Anschlusselement
200 Einrichtung
202 Grundkörper
204 Signalisierungseinrichtung
208 Kanal
212 Endabschnitt
214 Kanal-Endabschnitt
216 Stromleiter
218 Stromleiter
220 Stromleiter-Endabschnitt
222 Stromleiter-Endabschnitt
224 Zwischenabschnitt
226 Teilabschnitt
228 Versorgungsleitung
230 Versorgungsleitung
232 Versorgungsleitungs-Endabschnitt
234 Einsteckkörper
236 Warenregal
242 menschliche Hand
244 Erfassungsbereich
246 Halteelement
248 Komponente
250 Stromversorgungskontakt
252 dritter Kanal
254 Langleuchte
256 Teilbereich
258 undurchsichtiger Teilbereich

## Patentansprüche

1. Warenpräsentationssystem (66) umfassend ein System (10) und wenigstens ein Warenregal (236) mit wenigstens zwei Haltepfosten (68) und wenigstens einer Ablagevorrichtung (70),
wobei das System (10) eine Einrichtung (200) und wenigstens eine Abschlusseinrichtung (14) aufweist,
wobei die Einrichtung einen länglichen Grundkörper (202) aus einem Kunststoffmaterial zum Anbringen an einer Ablagevorrichtung (70) eines Warenregals (236) und wenigstens eine an dem Grundkörper (202) angebrachte Signalisierungseinrichtung (204) umfasst, die zum Signalisieren einer sich der Ablagevorrichtung (70) nähernden Handbewegung und/oder zum Signalisieren einer sich von der Ablagevorrichtung (70) entfernenden Handbewegung vorgesehen ist, wenn der Grundkörper (202) aus Kunststoffmaterial zum Anbringen an der Ablagevorrichtung (70) an dieser Ablagevorrichtung (70) angebracht ist, wobei der Grundkörper (202) einen sich über die gesamte Länge des Grundkörpers (202) erstreckenden Kanal (208) aufweist, wobei die Signalisierungseinrichtung (204) in dem Kanal (208) angeordnet ist,
wobei der Grundkörper (202) der Einrichtung (200) zwei entgegengesetzte Endabschnitte (212) aufweist, wobei jeder der Endabschnitte (212) einen von zwei entgegengesetzten Kanal-Endabschnitten (214) des Kanals (208) aufweist,
wobei das System (10) wenigstens zwei Stromleiter (216, 218) zur Stromversorgung der Signalisierungseinrichtung (204) aufweist,
wobei jeder der Stromleiter (216, 218) zwei Stromleiter-Endabschnitte (220, 222) und einen Zwischenabschnitt (224) aufweist,
wobei der Zwischenabschnitt (224) jedes Stromleiters (216, 218) in dem Kanal (208) angeordnet ist und von jedem Stromleiter (216, 218) jeweils einer der Stromleiter-Endabschnitte (220, 222) in jeweils einem der beiden entgegengesetzten Kanal-Endabschnitte (214) mit wenigstens einem Teilabschnitt (226) angeordnet ist,
wobei die Abschlusseinrichtung (14) wenigstens zwei elektrische Versorgungsleitungen (228, 230) aufweist, die zum Herstellen einer Verbindung mit einer Stromquelle (36) vorgesehen sind,
wobei die Abschlusseinrichtung (14) mit wenigstens einem der beiden entgegengesetzten Endabschnitte (212) des Grundkörpers (202) verbindbar ist,
wobei durch Verbinden der Abschlusseinrichtung (14) mit dem Endabschnitt (212) des Grundkörpers (202) jeweils ein Versorgungsleitungs-Endabschnitt (232) jeder der Versorgungsleitungen (228, 230) mit jeweils einem Stromleiter-Endabschnitt (220, 222) der Stromleiter-Endabschnitte (220, 222) elektrisch leitend kontaktierbar ist, die in dem Kanal-Endabschnitt (214) des Endabschnitts (212) des Grundkörpers (202) mit wenigstens einem Teilabschnitt (226) angeordnet sind,
- wobei der Grundkörper (202) der Einrichtung (200) an der Ablagevorrichtung (70) anbringbar ist,
- wobei die Ablagevorrichtung (70) ein Ablageelement (72) zum Ablegen von Waren (74) und zwei Halteelemente (76) aufweist,
- wobei die Halteelemente (76) mit dem Ablageelement (72) verbunden sind,
- wobei jeder Haltepfosten (68) wenigstens eine Aufnahme (78) aufweist, in welche jeweils eines der Halteelemente (76) zum Halten der Ablagevorrichtung (70) an den Haltepfosten (68) aufnehmbar ist,
- wobei wenigstens einer der Haltepfosten (68) wenigstens zwei elektrische Leiter (80) aufweist, die zum Anschließen an eine Stromquelle (82) vorgesehen sind,
- wobei wenigstens eines der Haltelemente (76) wenigstens zwei elektrische Anschlusselemente (84) aufweist, wobei an jedes Anschlusselement (84) jeweils eine der Versorgungsleitungen (32, 34, 228,230) der Abschlusseinrichtung (14) anschließbar ist,
- wobei jedes Anschlusselement (84) durch Aufnehmen des Halteelements (76) in der Aufnahme (78) des Haltepfostens (68) mit jeweils einem der Leiter (80) des Haltepfostens (68) elektrisch leitend kontaktierbar ist,
wobei der Grundkörper (202) einen weiteren Kanal (16) aufweist, wobei in dem Kanal (16) mehrere elektronische Anzeigeeinrichtungen (11) zur Anzeige von warenbezogenen Informationen aufgenommen sind, wobei der weitere Kanal (16) sich über die gesamte Länge des Grundkörpers (202) erstreckt,
- wobei jeder der Endabschnitte (212) des Grundkörpers (202) einen von zwei entgegengesetzten Kanal-Endabschnitten (20) des weiteren Kanals (16) aufweist,
- wobei die Anzeigeeinrichtungen (11) in dem weiteren Kanal (16) aufgenommen sind,
- wobei das System (10) wenigstens zwei Stromleiter (21, 22) zur Stromversorgung der Anzeigeeinrichtungen (11) aufweist,
- wobei jeder der Stromleiter (21, 22) zwei Stromleiter-Endabschnitte (24, 26) und einen Zwischenabschnitt (29) aufweist,
- wobei der Zwischenabschnitt (29) jedes Stromleiters (21, 22) in dem weiteren Kanal (16) angeordnet ist und von jedem Stromleiter (21,22) jeweils einer der Stromleiter-Endabschnitte (24, 26) in jeweils einem der beiden entgegengesetzten Kanal-Endabschnitte (20) des weiteren Kanals (16) mit wenigstens einem Teilabschnitt (27) angeordnet ist,
- wobei durch Aufnehmen der Anzeigeeinrichtungen (11) in dem weiteren Kanal (16) jeweils ein Stromversorgungskontakt (28) jeder Anzeigeeinrichtung (11) mit jeweils einem der Stromleiter (21, 22) elektrisch leitend kontaktierbar ist,
- wobei die Abschlusseinrichtung (14) wenigstens zwei weitere elektrische Versorgungsleitungen (32, 34) aufweist, die zum Herstellen einer Verbindung mit einer Stromquelle (36) vorgesehen sind,
- wobei durch Verbinden der Abschlusseinrichtung (14) mit dem Endabschnitt (212) des Grundkörpers (202) jeweils ein Versorgungsleitungs-Endabschnitt (38) jeder der weiteren Versorgungsleitungen (32, 34) mit jeweils einem Stromleiter-Endabschnitt (24, 26) der Stromleiter-Endabschnitte (24, 26) elektrisch leitend kontaktierbar ist, die in dem Kanal-Endabschnitt (20) des Endabschnitts (221) des Grundkörpers (12) mit wenigstens einem Teilabschnitt (27) angeordnet sind.

2. Warenpräsentationssystem (66) nach Anspruch 1, **dadurch gekennzeichnet, dass** das Ablageelement (72) länglich ausgebildet ist, wobei der längliche Grundkörper (202) an der Ablagevorrichtung (70) in einer Anordnung anbringbar ist, bei welcher eine sich entlang der Längsachse (86) des Grundkörpers (202) erstreckende Fläche (90) des Grundkörpers (12) einer sich entlang der Längsachse (88) des Ablageelements (72) erstreckenden Fläche (91) des Ablageelements (72) zugewandt ist.

3. Warenpräsentationssystem (66) nach einem der Ansprüche 1 oder 2, **dadurch gekennzeichnet, dass** die Halteelemente (76) mit dem Ablageelement (72) lösbar verbunden sind.

4. Warenpräsentationssystem nach einem der vorangehenden Ansprüche **dadurch gekennzeichnet, dass** die Abschlusseinrichtung (14) einen Flachkörper (40) aus einem Kunststoffmaterial mit zwei entgegengesetzten Seiten (42, 44) und einen mit einem der beiden Seiten (42, 44) verbundenen Einsteckkörper (234) aus einem Kunststoffmaterial aufweist, der zum Einstecken in den Kanal (208) vorgesehen ist, in dem die Signalisierungseinrichtung (204) angeordnet ist, wobei der Einsteckköper (234) zum Verbinden der Abschlusseinrichtung (14) mit dem Endabschnitt (212) des Grundkörpers (202) durch stirnseitiges Einstecken in den Kanal (208), in dem Kanal (208) kraftschlüssig aufnehmbar ist.

5. Warenpräsentationssystem nach einem der vorangehenden Ansprüche, **dadurch gekennzeichnet, dass** die Abschlusseinrichtung (14) einen weiteren Einsteckkörper (46) aufweist, der zum Einstecken in den weiteren Kanal (16) vorgesehen ist, wobei der weitere Einsteckköper (46) zum Verbinden der Abschlusseinrichtung (14) mit dem Endabschnitt (212) des Grundkörpers (202) durch stirnseitiges Einstecken in den weiteren Kanal (16), in dem weiteren Kanal (16) kraftschlüssig aufnehmbar ist.

6. Warenpräsentationssystem nach einem der vorangehenden Ansprüche, **dadurch gekennzeichnet, dass** die Abschlusseinrichtung (14) mit wenigstens einem der beiden entgegengesetzten Endabschnitte (212) des Grundkörpers (202) lösbar verbindbar ist.

## Claims

1. Goods presentation system (66) comprising a system (10) and at least one goods shelf (236) with at least two support posts (68) and at least one storage device (70),
wherein the system (10) has a device (200) and at least one closure device (14), wherein the device comprises an elongated base body (202) made of a plastic material for affixing to a storage device (70) of a goods shelf (236) and at least one signalling device (204) affixed to the base body (202), which device is provided for signalling a hand movement approaching the storage device (70) and/or for signalling a hand movement moving away from the storage device (70) when the base body (202) made of plastic material for affixing to the storage device (70) is affixed to this storage device (70), wherein the base body (202) has a channel (208) extending over the entire length of the base body (202), wherein the signalling device (204) is arranged in the channel (208),
wherein the base body (202) of the device (200) has two opposed end sections (212), wherein each of the end sections (212) has one of two opposed channel end sections (214) of the channel (208),
wherein the system (10) has at least two conductors (216, 218) for supplying power to the signalling device (204),
wherein each of the conductors (216, 218) has two conductor end sections (220, 222) and an intermediate section (224),
wherein the intermediate section (224) of each conductor (216, 218) is arranged in the channel (208) and of each conductor (216, 218) respectively one of the conductor end sections (220, 222) is arranged in respectively one of the two opposed channel end sections (214) with at least one sub-section (226),
wherein the closure device (14) has at least two electric supply lines (228, 230), which are provided to create a connection to a power source (36),
wherein the closure device (14) can be connected to at least one of the two opposed end sections (212) of the base body (202),
wherein by connecting the closure device (14) to the end section (212) of the base body (202) a supply line end section (232) respectively of each of the supply lines (228, 230) is contactable in an electrically conductive manner with respectively one conductor end section (220, 222) of the conductor end sections (220, 222), which are arranged in the channel end section (214) of the end section (212) of the base body (202) with at least one sub-section (226),
- wherein the base body (202) of the device (200) can be affixed to the storage device (70),
- wherein the storage device (70) has a storage element (72) for storing goods (74) and two support elements (76),
- wherein the support elements (76) are connected to the storage element (72),
- wherein each support post (68) has at least one seating (78) in which respectively one of the support elements (76) for supporting the storage device (70) on the support posts (68) can be held,
- wherein at least one of the support posts (68) has at least two electric conductors (80), which are provided for connection to a power source (82),
- wherein at least one of the support elements (76) has at least two electric connection elements (84), wherein one of the supply lines (32, 34, 228, 230) respectively of the closure device (14) is connectable to each connection element (84),
- wherein each connection element (84) is contactable in an electrically conductive manner with respectively one of the conductors (80) of the support post (68) by holding of the support element (76) in the seating (78) of the support post (68),
wherein the base body (202) has a further channel (16), wherein a number of electronic display devices (11) for displaying goods-related information are taken up in the channel (16), wherein the further channel (16) extends over the entire length of the base body (202),
- wherein each of the end sections (212) of the base body (202) has one of two opposed channel end sections (20) of the further channel (16),
- wherein the display devices (11) are taken up in the further channel (16),
- wherein the system (10) has at least two conductors (21, 22) for supplying power to the display devices (11),
- wherein each of the conductors (21, 22) has two conductor end sections (24, 26) and an intermediate section (29),
- wherein the intermediate section (29) of each conductor (21, 22) is arranged in the further channel (16) and of each conductor (21, 22) respectively one of the conductor end sections (24, 26) is arranged in respectively one of the two opposed channel end sections (20) of the further channel (16) with at least one sub-section (27),
- wherein by take-up of the display devices (11) in the further channel (16) respectively one power supply contact (28) of each display device (11) is contactable in an electrically conductive manner with respectively one of the conductors (21, 22),
- wherein the closure device (14) has at least two further electric supply lines (32, 34), which are provided to create a connection to a power source (36),
- wherein by connecting the closure device (14) to the end section (212) of the base body (202) respectively one supply line end section (38) of each of the further supply lines (32, 34) is contactable in an electrically conductive manner with respectively one conductor end section (24, 26) of the conductor end sections (24, 26) that are arranged in the channel end section (20) of the end section (212) of the base body (12) with at least one sub-section (27).

2. Goods presentation system (66) according to claim 1, **characterised in that** the storage element (72) is formed elongated, wherein the elongated base body (202) can be affixed to the storage device (70) in an arrangement in which a surface (90) of the base body (12) extending along the longitudinal axis (86) of the base body (202) faces a surface (91) of the storage element (72) extending along the longitudinal axis (88) of the storage element (72).

3. Goods presentation system (66) according to one of claims 1 or 2, **characterised in that** the support elements (76) are connected detachably to the storage element (72).

4. Goods presentation system (66) according to one of the previous claims, **characterised in that** the closure device (14) has a flat body (40) made of a plastic material with two opposed sides (42, 44) and a plug-in body (234) made of a plastic material connected to one of the two sides (42, 44), which plug-in body is provided for plugging into the channel (208) in which the signalling device (204) is arranged, wherein the plug-in body (234) can be held frictionally in the channel (208) for connecting the closure device (14) to the end section (212) of the base body (202) by plugging into the channel (208) on the end face.

5. Goods presentation system (66) according to one of the previous claims, **characterised in that** the closure device (14) has a further plug-in body (46), which is provided for plugging into the further channel (16), wherein the further plug-in body (46) can be held frictionally in the further channel (16) for connecting the closure device (14) to the end section (212) of the base body (202) by plugging into the further channel (16) on the end face.

6. Goods presentation system according to one of the previous claims, **characterised in that** the closure device (14) can be connected detachably to at least one of the two opposed end sections (212) of the base body (202).

## Revendications

1. Système de présentation de produit (66) comprenant un système (10) et au moins une étagère pour produits (236) dotée d'au moins deux montants de maintien (68) et d'au moins un dispositif de dépôt (70),
dans lequel le système (10) comporte un équipement (200) et au moins un équipement de terminaison (14),
dans lequel l'équipement comprend un corps de base (202) allongé en matière plastique, destiné à être monté sur un dispositif de dépôt (70) d'une étagère pour produits (236) et au moins un équipement de signalisation (204) monté sur le corps de base (202), ledit équipement de signalisation étant prévu pour signaliser un mouvement de main s'approchant du dispositif de dépôt (70) et/ou pour signaliser un mouvement de main s'éloignant du dispositif de dépôt (70) quand le corps de base (202) en matière plastique destiné à être monté sur le dispositif de dépôt (70) est monté sur ce dispositif de dépôt (70), le corps de base (202) comportant un canal (208) s'étendant sur toute la longueur du corps de base (202), l'équipement de signalisation (204) étant disposé dans le canal (208),
dans lequel le corps de base (202) de l'équipement (200) comporte deux parties d'extrémité (212) opposées, chacune des parties d'extrémité (212) comportant une de deux parties d'extrémité de canal (214) opposées du canal (208),
dans lequel le système (10) comporte au moins deux conducteurs de courant (216, 218) pour l'alimentation électrique de l'équipement de signalisation (204),
dans lequel chacun des conducteurs de courant (216, 218) comporte deux parties d'extrémité de conducteur de courant (220, 222) et une partie intermédiaire (224), dans lequel la partie intermédiaire (224) de chaque conducteur de courant (216, 218) est disposée dans le canal (208) et respectivement une des parties d'extrémité de conducteur de courant (220, 222) de chaque conducteur de courant (216, 218) est disposée avec au moins un tronçon (226) dans respectivement une des deux parties d'extrémité de canal (214) opposées,
dans lequel l'équipement de terminaison (14) comporte au moins deux lignes d'alimentation électrique (228, 230) qui sont prévues pour établir une liaison avec une source de courant (36),
dans lequel l'équipement de terminaison (14) peut être relié à au moins une des deux parties d'extrémité (212) opposées du corps de base (202),
dans lequel, par la liaison de l'équipement de terminaison (14) avec la partie d'extrémité (212) du corps de base (202), respectivement une partie d'extrémité de ligne d'alimentation (232) de chacune des lignes d'alimentation (228, 230) peut être amenée en contact de manière électriquement conductrice avec respectivement une partie d'extrémité de conducteur de courant (220, 222) des parties d'extrémité de conducteur de courant (220, 222) qui sont disposées avec au moins un tronçon (226) dans la partie d'extrémité de canal (214) de la partie d'extrémité (212) du corps de base (202),
- dans lequel le corps de base (202) de l'équipement (200) peut être monté sur le dispositif de dépôt (70),
- dans lequel le dispositif de dépôt (70) comporte un élément de dépôt (72) pour poser des produits (74) et deux éléments de maintien (76),
- dans lequel les éléments de maintien (76) sont reliés à l'élément de dépôt (72),
- dans lequel chaque montant de maintien (68) comporte au moins un logement (78) dans lequel un des éléments de maintien (76) peut respectivement être reçu sur les montants de maintien (68) pour retenir le dispositif de dépôt (70),
- dans lequel au moins un des montants de maintien (68) comporte au moins deux conducteurs électriques (80) qui sont prévus pour le raccordement à une source de courant (82),
- dans lequel au moins un des éléments de maintien (76) comporte au moins deux éléments de raccordement (84) électriques, une des lignes d'alimentation (32, 34, 228, 230) de l'équipement de terminaison (14) pouvant respectivement être raccordée à chaque élément de raccordement (84),
- dans lequel chaque élément de raccordement (84) peut être amené en contact de manière électriquement conductrice avec respectivement un des conducteurs (80) du montant de maintien (68) par la réception de l'élément de maintien (76) dans le logement (78) du montant de maintien (68),
dans lequel le corps de base (202) comporte un autre canal (16), plusieurs équipements d'affichage (11) électroniques destinés à afficher des informations relatives à des produits étant reçus dans le canal (16), l'autre canal (16) s'étendant sur toute la longueur du corps de base (202),
- dans lequel chacune des parties d'extrémité (212) du corps de base (202) comporte une de deux parties d'extrémité de canal (20) opposées de l'autre canal (16),
- dans lequel les équipements d'affichage (11) sont reçus dans l'autre canal (16),
- dans lequel le système (10) comporte au moins deux conducteurs de courant (21, 22) pour l'alimentation électrique des équipements d'affichage (11),
- dans lequel chacun des conducteurs de courant (21, 22) comporte deux parties d'extrémité de conducteur de courant (24, 26) et une partie intermédiaire (29),
- dans lequel la partie intermédiaire (29) de chaque conducteur de courant (21, 22) est disposée dans l'autre canal (16) et respectivement une des parties d'extrémité de conducteur de courant (24, 26) de chaque conducteur de courant (21, 22) est disposée avec au moins un tronçon (27) dans respectivement une des deux parties d'extrémité de canal (20) opposées de l'autre canal (16),
- dans lequel respectivement un contact d'alimentation électrique (28) de chaque équipement d'affichage (11) peut être amené en contact de manière électriquement conductrice avec respectivement un des conducteurs de courant (21, 22) par la réception des équipements d'affichage (11) dans l'autre canal (16),
- dans lequel l'équipement de terminaison (14) comporte au moins deux autres lignes d'alimentation électrique (32, 34) qui sont prévues pour établir une liaison avec une source de courant (36),
- dans lequel, par la liaison de l'équipement de terminaison (14) avec la partie d'extrémité (212) du corps de base (202), respectivement une partie d'extrémité de ligne d'alimentation (38) de chacune des autres lignes d'alimentation (32, 34) peut être amenée en contact de manière électriquement conductrice avec respectivement une partie d'extrémité de conducteur de courant (24, 26) des parties d'extrémité de conducteur de courant (24, 26) qui sont disposées avec au moins un tronçon (27) dans la partie d'extrémité de canal (20) de la partie d'extrémité (212) du corps de base (12).

2. Système de présentation de produit (66) selon la revendication 1, **caractérisé en ce que** l'élément de dépôt (72) est réalisé allongé, le corps de base (202) allongé pouvant être monté sur le dispositif de dépôt (70) dans une disposition dans laquelle une surface (90) du corps de base (12) s'étendant le long de l'axe longitudinal (86) du corps de base (202) est orientée vers une surface (91) de l'élément de dépôt (72) s'étendant le long de l'axe longitudinal (88) de l'élément de dépôt (72).

3. Système de présentation de produit (66) selon l'une des revendications 1 ou 2, **caractérisé en ce que** les éléments de maintien (76) sont reliés de manière libérable à l'élément de dépôt (72).

4. Système de présentation de produit selon l'une des revendications précédentes, **caractérisé en ce que** l'équipement de terminaison (14) comporte un corps plat (40) en matière plastique avec deux faces (42, 44) opposées et un corps emboîtable (234) en matière plastique relié à une des deux faces (42, 44), lequel est prévu pour être emboîté dans le canal (208) dans lequel est disposé l'équipement de signalisation (204), le corps emboîtable (234) pouvant être reçu par liaison de force dans le canal (208) pour relier l'équipement de terminaison (14) à la partie d'extrémité (212) du corps de base (202) en l'emboîtant côté frontal dans le canal (208).

5. Système de présentation de produit selon l'une des revendications précédentes, **caractérisé en ce que** l'équipement de terminaison (14) comporte un autre corps emboîtable (46) qui est prévu pour être emboîté dans l'autre canal (16), l'autre corps emboîtable (46) pouvant être reçu par liaison de force dans l'autre canal (16) pour relier l'équipement de terminaison (14) à la partie d'extrémité (212) du corps de base (202) en l'emboîtant côté frontal dans l'autre canal (16).

6. Système de présentation de produit selon l'une des revendications précédentes, **caractérisé en ce que** l'équipement de terminaison (14) peut être relié de manière libérable à au moins une des deux parties d'extrémité (212) opposées du corps de base (202).
